Europäisches Patentamt

European Patent Office

Office européen des brevets

(19)

(11) EP 1 286 287 A1

## (12) EUROPEAN PATENT APPLICATION
published in accordance with Art. 158(3) EPC

(43) Date of publication:
26.02.2003 Bulletin 2003/09

(51) Int Cl.⁷: **G06F 17/60**

(21) Application number: 01934350.8

(22) Date of filing: 25.05.2001

(86) International application number:
**PCT/JP01/04398**

(87) International publication number:
**WO 01/093133 (06.12.2001 Gazette 2001/49)**

(84) Designated Contracting States:
**AT BE CH CY DE DK ES FI FR GB GR IE IT LI LU MC NL PT SE TR**

(30) Priority: **30.05.2000 JP 2000164797**
**22.05.2001 JP 2001153243**

(71) Applicant: **System Location Co., Ltd.**
**Tokyo 102-0076 (JP)**

(72) Inventors:
• **YANO, Seiichi**
**Chiyoda-ku Tokyo 102-0076 (JP)**
• **HIROBE, Yoshinobu**
**Chiyoda-ku Tokyo 102-0076 (JP)**

(74) Representative: **Körfer, Thomas, Dipl.-Phys. et al**
**Mitscherlich & Partner,**
**Patent- und Rechtsanwälte,**
**Sonnenstrasse 33**
**80331 München (DE)**

### (54) VEHICLE RESALE PRICE ANALYSIS SYSTEM

(57)    A vehicle resold price analysis system of the present invention comprises a first step which extracts data concerning resold vehicle resold within a predetermined period, a second step which extracts a factor which has affected the vehicle resold price by correlation analysis using data extracted at the first step, and a third step which obtains multi-regression equation from a correlation of the extracted above-mentioned factor and the data concerning sold price, and the multi-regression equation obtained in the third step is used for estimating the information concerning estimated sold price, estimated remaining price, or estimated remaining value rate of vehicle before resale. The sold price of the goods before resale and the like can be estimated objectively from the sold data of goods such as already resold vehicle, without depending on human experience.

FIG.1

EP 1 286 287 A1

**Description**

Technical Field

The present invention relates to a vehicle resold price analysis system which estimates information concerning a sold price, a remaining price, or a remaining value rate of a vehicle before resale using data concerning resold vehicle; an asset evaluation system which estimates a current price of a vehicle in a using contact period at arbitrary time using data concerning resold vehicle; a remaining value setting system which sets a remaining value concerning new contract vehicle using data concerning resold vehicle; a remaining value setting system which sets remaining value concerning new contract goods using data concerning resold goods; and a remaining value setting system which sets remaining value concerning a new vehicle type using data concerning resold vehicle.

The invention also relates to a remaining value calculation program used for obtaining the output information peculiar to a user application utilizing remaining value data by inputting, in the user application, vehicle type identification information for narrowing down specific vehicle type such as a model specification number, a classification identification number, and a vehicle type name, and variation condition information such as a lease period, using period, vehicle registration date, leasing contract date, start-using date, mileage, and ranking; a updating method for this remaining value calculation program; and a user application system using this remaining value calculation program.

BACKGROUND TECHNIQUE

Generally, a resold price of a vehicle after expiration of using contract is experientially judged from first registration year, mileage of vehicle and the like. Vehicles after expiration of using contract are sold to a used-vehicle dealer based on this judgment, or sent to a bid hall or an auction place, or scrapped.

However, the estimated resale price by human experience does not necessarily have a clear basis, and variation in the estimated price by the judging person is not small. Since exact resale cannot be estimated, loss at useless conveyance, or in the bid hall or the auction is generated.

On the one hand, in the case of a vehicle of leasing contract, rental contract, or loan contract with remaining value, sale profit at the time of resale is set as remaining value. Under present circumstances, however, profit and loss by this setting remaining value can not be judged only when the vehicle is sold.

On the other hand, it is commonly understood that the sales separated from actual condition of ordinary profit is thought as important, and as the number of subsidiaries or related companies is larger, sales are larger. However, at present, an important factor is how much it is possible to distribute to stockholders, and it is important that management information of the company is exhibited. The importance of information disclosure is applied to "ranking" of a company. In the case of a lease enterprise, it is important to offer new service and a profit is fixed by making structure which controls resale and obtains a positive profit at low cost. That is, it becomes very important to set a competitive remaining value. If a remaining value setting can rationally be calculated and the information can be exhibited, a vehicle in a contact period can be handled as money while using the vehicle as asset mortgage deed. Thus, to construct a system for setting a remaining value is extremely important.

It is an object of the present invention to provide a goods resold price analysis system capable of estimating the sold price of the goods before resale from sold data of goods such as already resold vehicle, without depending on human experience.

It is another object of the invention to provide a vehicle resold price analysis system capable of obtaining information concerning objective estimated sold price concerning the vehicle to be resold.

It is another object of the invention to provide a remaining value profit-and-loss analysis system capable of obtaining objective remaining value profit-and-loss information on using contract expiration time concerning the vehicles in a using contact period.

It is another object of the invention to provide an asset evaluation system capable of obtaining objective market price information at arbitrary time concerning vehicle in a using contact period.

It is another object of the invention to provide a remaining value setting system capable of obtaining objective remaining value estimation information concerning new contract vehicle.

It is another object of the invention to provide a storage medium capable of obtaining a correlation equation or a table having a correlation for obtaining objective sold price concerning new contract vehicle is established.

It is another object of the invention to provide a storage medium capable of obtaining objective sold price concerning new contract vehicle.

It is another object of the invention to provide a storage medium capable of obtaining a correlation equation or a table having correlation for obtaining the objective sold price concerning new contract vehicle is established, and capable of outputting information concerning resold vehicle which is a base of estimated sold price.

It is another object of the invention to provide a display capable of outputting information concerning the resold vehicle which is a base of estimated sold price.

It is another object of the invention to provide a remaining value setting system capable of setting remaining price concerning new contract vehicle.

It is another object of the invention to provide a remaining value setting system capable of setting remaining price concerning new contract goods.

It is another object of the invention to provide a remaining value setting system capable of setting remaining price concerning a new vehicle type.

It is another object of the invention to provide a vehicle resold price analysis system capable of more correctly obtaining estimated sold price with respect to average vehicle without a special reason.

It is another object of the invention to provide a remaining value calculation program which can be used for obtaining the output information peculiar to a user application utilizing remaining value data.

Disclosure of the Invention

A first mode for carrying out the present invention provides a vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, a weight tax, an insurance class, a using contract year, the expiration year of a using contract, a using contact period, a new vehicle price, a sold price after expiration of using contract, mileage at the time of resale, assessment evaluation at the time of resale, the system comprising a first step which extracts data concerning resold vehicle resold within a predetermined period, a second step which extracts a factor which has affected the vehicle resold price by correlation analysis using data extracted at the first step, and a third step which obtains multi-regression equation from a correlation of the extracted above-mentioned factor and the data concerning sold price, wherein the multi-regression equation obtained in the third step is used for estimating the information concerning estimated sold price, estimated remaining price, or estimated remaining value rate of vehicle before resale.

In the vehicle resold price analysis system of the first mode, a factor which largely influences the sold price is extracted by correlation analysis from the sold data concerning the already resold vehicles, and a multi-regression equation is obtained from the correlation between the extracted factor and the data concerning the sold price. With this, it is possible to obtain information concerning objective estimated sold price about vehicles to be resold.

A second mode for carrying out the invention provides a vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, a weight tax, an insurance class, a using contract year, the expiration year of a using contract, a using contact period, a new vehicle price, a sold price after expiration of using contract, mileage at the time of resale, assessment evaluation at the time of resale, wherein a correlation equation or a table having a correlation for obtaining information concerning estimated sold price, estimated remaining price, or estimated remaining value rate of vehicle before resale is obtained, using at least data concerning actually using period such as elapsed months or using contact period from first registration year or a using contract year, out from data concerning the resold vehicle resold within a predetermined period, data concerning displacement volume, data concerning a new vehicle price, and data concerning the mileage in the actually using period.

According to the second mode, it is possible to obtain the objective estimated sold price concerning vehicles to be resold by obtaining the correlation equation or the table having the correlation for obtaining information concerning estimated sold price, estimated remaining price or estimated remaining value rate of a vehicle before resale, using data concerning the actual using period, displacement volume, new vehicle price, mileage in the actual using period which are recognized as largely influencing the sold price by experience.

A third mode for carrying out the invention provides a vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, a weight tax, an insurance class, a using contract year, the expiration year of a using contract, a using contact period, a new vehicle price, a sold price after expiration of using contract, mileage at the time of resale, assessment evaluation at the time of resale, wherein a correlation equation or a table having a correlation for obtaining information concerning estimated sold price, estimated remaining price, or estimated remaining value rate of vehicle before resale is obtained, using at least data concerning actually using period such as elapsed months or using contact period from first registration year or a using contract year, and data concerning a new vehicle price, out from data concerning the resold vehicle resold within a predetermined period.

According to the third mode, it is possible to obtain the objective estimated sold price concerning vehicles to be resold by obtaining the correlation equation or the table having the correlation for obtaining information concerning estimated sold price, estimated remaining price or estimated remaining value rate of a vehicle before resale, using data concerning the actual using period and new vehicle price which are recognized as largely influencing the sold price by experience.

According to a fourth mode for carrying out the invention, in the vehicle resold price analysis system of the third mode, data concerning the mileage in the actually using period is stored.

According to the fourth mode, it is possible to obtain the objective estimated sold price concerning vehicles to be resold by obtaining the correlation equation or the table having the correlation for obtaining information concerning estimated sold price, estimated remaining price or estimated remaining value rate of a vehicle before resale, using data concerning the actual using period and new vehicle price which are recognized as largely influencing the sold price by experience from the sold data concerning already resold vehicles.

According to a fifth mode for carrying out the invention, in the vehicle resold price analysis system according to any one of the second to fourth modes, the resold vehicles are classified according to vehicle uses such as riding, business, cargo and bus, or according to a vehicle shape such as a sedan type, a hatchback type, and a one box type, and data concerning the classified resold vehicle is used.

According to the fifth mode, by dividing vehicle according to use or shape of the vehicle, it is possible to obtain the objective estimated sold price can be obtained concerning the vehicle to be resold by obtaining the correlation equation or the table having the correlation for obtaining information concerning estimated sold price, estimated remaining price, or estimated remaining value rate of vehicle before resale in consideration of the influence of the purpose, popularity, and the like

According to a sixth mode for carrying out the invention, in the vehicle resold price analysis system according to any one the second to fifth modes, information concerning estimated sold price, estimated remaining price, or estimated remaining value rate of vehicle before resale is output using the correlation equation or the table having the correlation. According to the sixth mode, it is possible to obtain the objective estimated sold price concerning the vehicle to be resold.

A seventh mode for carrying out the invention provides a remaining value profit-and-loss analysis system which outputs remaining value profit-and-loss information at arbitrary time concerning vehicle in a using contact period using the correlation equation or the table having correlation obtained by the vehicle resold price analysis system described in any one of the second to fifth modes.

According to the seventh mode, it is possible to obtain the objective remaining value profit-and-loss information concerning the vehicle in a using contact period.

An eighth mode for carrying out the invention provides a storage medium for storing data used for a vehicle resold price analysis system which estimates information concerning sold price, remaining price, or remaining value rate of the vehicle before resale, using data concerning resold vehicle, wherein, concerning resold vehicle resold within a predetermined period, the storage medium stores therein at least data concerning actually using period such as elapsed months or a using contact period from first registration year or a using contract year, data concerning displacement volume, data concerning a new vehicle price, and data concerning mileage in the actually using period.

According to the eighth mode, it is possible to obtain the correlation equation or a the table having the correlation for obtaining the objective sold price and the like concerning new contract vehicle, and to output information concerning resold vehicles which are bases of estimated sold price and the like.

A ninth mode for carrying out the invention provides a storage medium for storing data used for a vehicle resold price analysis system which estimates information concerning sold price, remaining price, or remaining value rate of the vehicle before resale, using data concerning resold vehicle, wherein, concerning resold vehicle resold within a predetermined period, the storage medium stores therein at least data concerning actually using period such as elapsed months or a using contact period from first registration year or a using contract year, and data concerning a new vehicle price, concerning resold vehicle resold within a predetermined period.

According to the ninth mode, it is possible to obtain the correlation equation or a the table having the correlation for obtaining the objective sold price and the like concerning new contract vehicle, and to output information concerning resold vehicles which are bases of estimated sold price and the like.

According to a tenth mode for carrying out the invention, in the storage medium of the ninth mode, data concerning the mileage in the actually using period is stored.

According to the tenth mode, it is possible to obtain the correlation equation or a the table having the correlation for obtaining the objective sold price and the like concerning new contract vehicle, and to output information concerning resold vehicles which are bases of estimated sold price and the like.

According to an eleventh mode for carrying out the invention, in the storage medium according to any one of the eighth to tenth modes, the storage medium stores therein data which can be classified according to vehicle uses such as riding, business, cargo and bus, or according to a vehicle shape such as a sedan type, a hatchback type, and a one box type.

According to the eleventh mode, it is possible to obtain the correlation equation or a the table having the correlation for obtaining the objective sold price while taking into account the influence such as a purpose and popularity of already resold vehicles, and to output information concerning the already resold vehicles which are bases of the estimated sold price and the like.

A twelfth mode for carrying out the invention provides a display for displaying data stored in the storage medium described in any one of the eighth to eleventh modes.

According to the twelfth mode, the information concerning the resold vehicle which is a base of the estimated sold price, by displaying the data stored in the storage medium of any one of the eighth to eleventh modes.

A thirteenth mode for carrying out the invention provides a vehicle resold price analysis system which estimates information concerning a sold price, a remaining price, or a remaining value rate of a vehicle before resale using a correlation equation drawn from correlation of at least elapsed period or using period from first registration year, vehicle type, popularity index determined according to the vehicle type, new vehicle price, a sold price at the time of resale, and the mileage at the time of resale, and using a table having the correlation, concerning the resold vehicle, wherein information concerning estimated sold price, estimated remaining price, or estimated remaining value rate at the time of resale is output by inputting or selecting data concerning elapsed period or using period from first registration year, vehicle type, popularity index determined according to the vehicle type, new vehicle price, and the mileage.

According to the thirteenth mode, information concerning estimated sold price, estimated remaining price, and estimated remaining value rate at the time of resale is output by inputting or selecting data concerning elapsed period or using period from first registration year, vehicle type, popularity index determined according to the vehicle type, new vehicle price, and the mileage.

A fourteenth mode for carrying out the invention provides a goods resold price analysis system which estimates information concerning sold price, remaining price, or remaining value rate of the goods before resale using a correlation equation drawn from correlation of at least manufacturing or selling time or using period, selling price, sold price at the time of resale, and actual use data at the time of resale, and using a table having the correlation, wherein information concerning estimated sold price, estimated remaining price, or estimated remaining value rate at the time of resale is output by inputting or selecting data concerning elapsed period or using period from manufacturing or selling time, selling price, and actual use.

According to the fourteenth mode, information concerning estimated sold price, estimated remaining price, or estimated remaining value rate at the time of resale is output by inputting or selecting data concerning elapsed period from manufacture or selling time or using period, selling price, and actual use.

A fifteenth mode for carrying out the invention provides a vehicle resold price analysis system which estimates information concerning sold price, remaining price, or remaining value rate of avehicle before resale using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, a weight tax, an insurance class, a using contract year, expiration year of a using contract, a using contact period, a new vehicle price, the sold price after expiration of using contract, mileage at the time of resale, assessment evaluation at the time of resale, wherein the system outputs average mileage, average sold price, average sold rate or average new vehicle price concerning resold vehicle, or standard mileage, standard sold price, standard sold rate, or standard new vehicle price concerning resold vehicle within a predetermined deviation value.

According to the fifteenth mode, the system outputs a standard mileage, standard sold price, standard sold rate, or standard new vehicle price concerning resold vehicle within a predetermined deviation among average mileage, average sold price, average sold rate, average new vehicle price, and resold vehicle concerning resold vehicle, together with information concerning estimated sold price, estimated remaining price, or estimated remaining value rate at the time of resale.

A sixteenth mode for carrying out the invention provides a remaining value profit-and-loss analysis system which estimates remaining value profit and loss of a vehicle before resale using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, a weight tax, an insurance class, a using contract year, expiration year of a using contract, a using contact period, a new vehicle price, the sold price after expiration of using contract, mileage at the time of resale, assessment evaluation at the time of resale, wherein an estimated sold price at the time of resale is calculated from the new vehicle price, monthly average mileage, the assumption mileage at the time of expiration of using contract, or assumption using period, concerning a vehicle in a using contact period, and remaining value profit and loss are output from the estimated sold price, and the estimated sold price set at the time of a using contract.

According to the sixteenth mode, estimated sold price at the time of resale can be calculated using the sold data concerning the already resold goods, and the remaining value profit and loss at the time of resale can be estimated from this estimated sold price and the estimated sold price set at the time of a using contract. Thus, since the remaining value profit and loss at the contract expiration time can be estimated from the objective data, it is possible to foresee a danger that the evaluation of a vehicle from the contract time point to the current time point is deteriorated and cumulative loss is generated. Therefore, a proper remaining value can be set at new contract by previously grasping the profit and loss which may be produced at the time of contract expiration.

A seventeenth mode for carrying out the invention provides a remaining value profit-and-loss analysis system which estimates remaining value profit and loss of goods before resale using data concerning resold goods such as a maker name, a model grade, goods model, using contract year, the expiration year of a using contract, a using contact period, a selling price, a sold price after expiration of the using contract, actual using state at the time of resale, assessment evaluation at the time of resale wherein an estimated sold price at the time of resale is calculated from a selling price, a monthly use situation, the assumption use situation at the time of expiration of using contract, or assumption using period concerning the goods in a using contact period, and remaining value profit and loss are output from the estimated sold price, and the price of estimated sale set at the time of the using contract.

According to the seventeenth mode, estimated sold price at the time of resale can be calculated using the sold data concerning the already resold goods, and the remaining value profit and loss at the time of resale can be estimated from this estimated sold price and the estimated sold price set at the time of a using contract. Thus, since the remaining value profit and loss at the contract expiration time can be estimated from the objective data, it is possible to foresee a danger that the evaluation of goods from the contract time point to the current time point is deteriorated and cumulative loss is generated. Therefore, a proper remaining value can be set at new contract by previously grasping the profit and loss which may be produced at the time of contract expiration.

An eighteenth mode for carrying out the invention provides a remaining value setting system which sets remaining value concerning new contract vehicle using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, a weight tax, an insurance class, a using contract year, expiration year of a using contract, a using contact period, a new vehicle price, the sold price after expiration of using contract, mileage at the time of resale, assessment evaluation at the time of resale, wherein an estimated sold price concerning new contract vehicle is calculated from a new vehicle price, monthly average mileage, assumption mileage at the time of expiration of using contract, or assumption using period concerning the vehicle in a using contact period, and remaining price concerning new contract vehicle is output from the estimated sold price.

According to the eighteenth mode, estimated sold price concerning new contract vehicle can be calculated using the sold data concerning the already resold goods, and remaining price concerning the new contract vehicle can be set from this estimated sold price.

A nineteenth mode for carrying out the invention provides a remaining value setting system which sets a remaining value concerning new contract goods using data concerning resold goods such as a maker name, a model grade, goods model, using contract year, the expiration year of a using contract, a using contact period, a selling price, a sold price after expiration of the using contract, actual using state at the time of resale, assessment evaluation at the time of resale, wherein an estimated sold price concerning new contract goods is calculated from a selling price, a monthly use situation, an assumption use situation at the time of expiration of using contract, or an assumption using period concerning the goods in a using contact period, and remaining price concerning new contract goods is output from the estimated sold price.

According to the nineteenth mode, estimated sold price concerning new contract vehicle can be calculated using the sold data concerning the already resold goods, and remaining price concerning the new contract goods can be set from this estimated sold price.

A twentieth mode for carrying out the invention provides a vehicle resold price analysis system which estimates information concerning a sold price, a remaining price, or a remaining value rate of a vehicle before resale, using data concerning vehicle spec such as a maker name, the number of years elapsed from manufacturing year, a vehicle type, a vehicle shape, displacement volume, fuel, grade, a transmission, and a drive system, and a sold price for every resold vehicle, wherein a resold vehicle having a standard deviation within a predetermined range is again selected from the average value of the sold price of the resold vehicle selected by the vehicle spec, and the average value of the sold price of the again selected resold vehicle is set as a standard sold price, and the standard sold price is set as an estimated sold price.

According to the twentieth mode, the vehicle resold by the special reason can be excluded by again selecting a resold vehicle having a standard deviation within a predetermined range from the average value of the sold price. Therefore, estimated sold price with respect to the average vehicle having no special reason can be obtained more correctly.

A twenty first mode for carrying out the invention provides a remaining value calculation program used for obtaining output information peculiar to a user application which utilizes remaining value data by inputting vehicle type specification information for narrowing down specific vehicle type such as a model specification number, a classification identification number and a vehicle type name, and variable condition information such as a lease period, using period, vehicle registration date, leasing contract date, a start-using date, mileage and ranking, wherein the program comprises a vehicle database retrieving function which retrieves the database having vehicle sold data and vehicle type data such as the model specification number, the classification identification number and the vehicle type name, and which extracts a corresponding retrieval result information, and a remaining value calculation function which calculates the remaining value from the variation condition information was input in the user application, and the retrieval result information extracted by the retrieval.

According to the twenty first mode, since the program has the vehicle database retrieving function and the remaining value calculation function, the program can be utilized for obtaining output information peculiar to the user application which utilizes the remaining value data by inputting the vehicle type identification information and the variation condition information in the user application.

According to a twenty second mode for carrying out the invention, in the remaining value calculation program of the twenty first mode, the program comprises, as the vehicle database retrieving function, a primary retrieving program which specifies a vehicle from a popularly called model of a maker, or a model specification number or certified model number described in an automobile inspection certificate, and a classification identification number, and which extracts a corresponding retrieval result information, and a secondary retrieving program which retrieves information given in retrieval sub-items such as a vehicle body number, a vehicle type name, shape, fuel, a transmission, displacement volume, a vehicle price, vehicle weight, or the maximum burden, when a vehicle can not be specified by the primary retrieving program or when a retrieval result information required by the primary retrieving program can not be extracted.

According to the twenty second mode, since the program has the secondary retrieving program in addition to the primary retrieving program, it is possible to effectively utilize the vehicle type identification information used in respective user applications. Therefore, necessity for separately adding input data for the remaining value calculation program is reduced, and the program can be utilized for general purpose.

According to a twenty third mode for carrying out the invention, in the remaining value calculation program of the twenty second mode, wherein as the remaining value calculation function, using a remaining value calculation equation which utilizes multi-regression analysis, the specified vehicle type and the variation condition are applied to the remaining value calculation equation to calculate the remaining value.

According to the twenty third mode, output information based on the past track record data can be obtained by using the remaining value calculation equation using multi-regression analysis.

Brief Description of the Drawings

Fig.1 is a block diagram showing a whole structure containing a vehicle resold price analysis system according to an embodiment according to the embodiment of the invention;
Fig.2 is a processing flowchart showing the obtaining method of the remaining value calculation equation according to the embodiment of the invention;
Fig.3 is a scatter diagram in which X-axis shows new vehicle price and Y-axis shows sold price;
Fig.4 is a scatter diagram in which X-axis shows mileage Y-axis shows sale remaining value rate;
Fig.5 is a scatter diagram in which X-axis shows new vehicle price and Y-axis shows the average distance conversion sold price;
Fig.6 is a scatter diagram in which X-axis shows mileage and Y-axis shows average new vehicle price conversion sold price remaining value rate;

Fig.7 is a scatter diagram in which X-axis shows rank and Y-axis shows ARZ;

Fig.8 is a scatter diagram in which normal equations in Fig.7 is adjusted;

Fig.9 is aprocessing flowchart showing an obtaining method of the remaining value calculation equation according to another embodiment of the invention;

Fig.10 is graph showing the multi-determination index when elapsed months, displacement volume, new vehicle price, and monthly mileage are selected as items;

Fig.11 is a screen image obtaining estimated sold price and estimated remaining value rate concerning a specific vehicle in a contact period or a specific vehicle at the time of a new contract in the system according to the embodiment of the invention;

Fig.12 is a screen image expecting remaining value profit and loss concerning the specific vehicle in a contact period based on estimated remaining value in the system according to the embodiment of the invention;

Fig.13 is a screen image for expecting remaining value profit and loss according to vehicle type concerning the vehicle in a contact period in the system according to the embodiment of the invention;

Fig. 14 is a screen image expecting remaining value profit and loss concerning the specific vehicle in a contact period based on estimated remaining value in the system according to the embodiment of the invention;

Fig.15 is a screen image for expecting remaining value profit and loss concerning a specific vehicle in a contact period based on estimated remaining value in the system according to the embodiment of the invention;

Fig.16 is a screen image showing tendencies of new vehicle price and successful bid price according to a lease period in the system according to the embodiment of the invention;

Fig.17 is a screen image showing tendencies of mileage and remaining value rate according to lease organization in the system according to the embodiment of the invention.

Fig.18 is a screen image showing tendencies of a lease period and remaining value rate in the system according to the embodiment of the invention; and

Fig.19 is a conceptual diagram for explaining the outline structure of the remaining value calculation system according to the embodiment of the invention.

Best Mode for Carrying out the Invention

One embodiment of the present invention will be explained below based on the drawings.

First, in the present invention, a using contract means a contract which permits use or possession for a predetermined period like a leasing contract, a rental contract, or a loan contract with remaining value, and expiration of using contract means end of a lease or a rental period or contract end by means of cancellation.

The following explanation of the embodiment of the invention is based on a vehicle resold price analysis system on the base of vehicle data resold in a bid hall or auction after rental contract expiration.

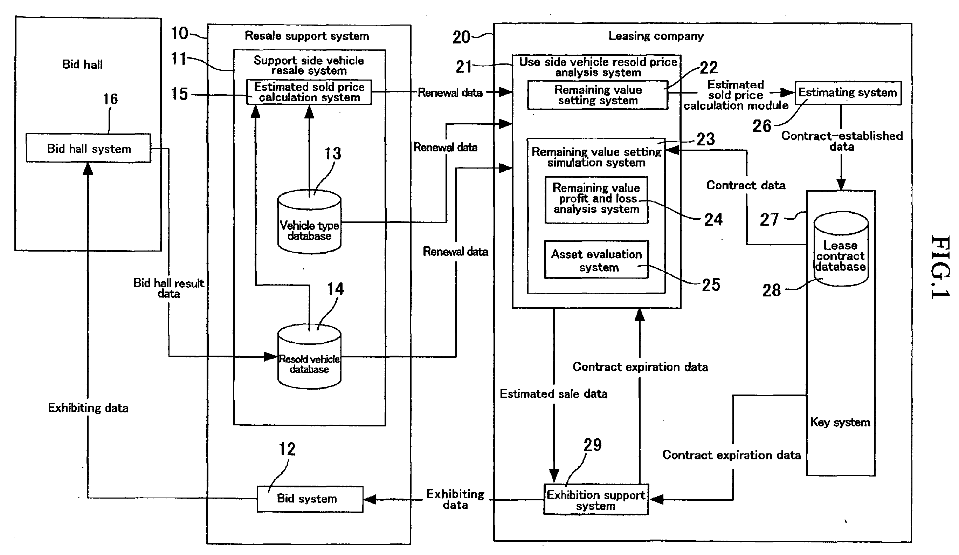

Fig.1 is a block diagram showing a whole structure containing the vehicle resold price analysis system of this embodiment.

A resale support system 10 is provided with a support side vehicle resale system 11 and a bid support system 12. The support side vehicle resale system 11 is provided with a vehicle type database 13, a resold vehicle database 14 and an estimated sold price calculation system 15.

Here, the vehicle type database 13 has data such as a maker name, a vehicle type name, vehicle uses, a vehicle shape, a vehicle type grade (a vehicle type name, a grade name), an authorization model, a popularly called model (a model specification number, a classification identification number), a transmission, a drive system, displacement volume, the number of doors, a capacity, burden, an engine model (motor model), the number of cylinders of engine, an engine mechanism, tire size, a turbo and supercharger, roof shape, emission control, body size, body color, automobile-tax classification, weight tax, insurance class, a popularity index, sale-start time and sale-end time. Here, the popularity index means an index which is ranked according to remaining value rate in a classification classified according to vehicle type. For example, when remaining value rates of Corolla and Civic are the same and remaining value rate of Sunny is lower than Corolla by two ranks, popularity index of Corolla is set to 25, popularity index of Civic is set to 25 and popularity index of Sunny is set to 22. A vehicle use is a classification classified according to use of vehicle, and it is classified into a passenger car, a van, a bus, a track, and the like. The vehicle form is classification determined by the number of doors or outside shape. For example, if a vehicle has 4 door + trunk, it is Sedan (SD), if the vehicle has 2 door + tailgate (without 4 door specification), it is hatchback (HB), if the vehicle has 2 door base + trunk, it is coupe or sport (CP), if the vehicle has 2 to 4 door + tailgate or 4 door base + full bonnet, it is bonnet wagon (BW), if the vehicle has 3 - 4 door + tailgate or a semi cab over, it is cab wagon (CW).

The resold vehicle database 14 has data concerning resold vehicle such as using contract year, expiration year of using contract, using contact period, new vehicle price, sold price after expiration of using contract, mileage at the time of resale, and assessment evaluation at the time of resale.

The estimated sold price calculation system 15 obtains a multi-regression equation, a correlation equation or a table having the correlation from the data of the vehicle type database 13 and the resold vehicle database 14, and calculates information concerning estimated sold price, estimated remaining price, or estimated remaining value rate before resale.

The bid system 12 selects the retail in dealer and the like, domestic bid hall, overseas bid hall, bid hall on web using the Internet, and exhibits the same in auction. For example, the exhibition data concerning exhibition vehicle is transmitted from the bid system 12 to the bid hall system 16 in the bid hall.

A use side system 20 used in a leasing company and the like has a use side vehicle resold price analysis system 21. This use side vehicle resold price analysis system 21 has a remaining value setting system 22 for setting remaining value concerning new contract vehicle, and are maining value simulation system 23 simulates the remaining value. As the remaining value simulation system 23, for example, there are a remaining value profit-and-loss analysis system 24 which estimates the remaining value profit and loss of the vehicle before resale, and an asset evaluation system 25 which estimates the current price at arbitrary time concerning vehicle in the using contact period.

The use side system 20 includes an estimating system 26 and a key system 27 which are used at the time of a leasing contract, in addition to the use side vehicle resold price analysis system 21. The key system 27 is provided with a leasing contract database 28 which stores lease conclusion data. The use side system 20 has an exhibition support system 29. This exhibition support system 29 transmits, to the bid system 12, contract expiration data concerning vehicle whose contract is completed, preferably, whose contract is to be completed after a predetermined period.

Next, exhibition data flow to a bid hall and the like is explained.

Contract expiration data concerning vehicle whose contract is completed, preferably, whose contract is to be completed after a predetermined period is sent to the exhibition support system 29 from the key system 27. In the exhibition support system 29, contract expiration data is transmitted to the use side vehicle resold price analysis system 21. The use side vehicle resold price analysis system 21 transmits the price data of estimated sold price based on the latest data to the exhibition support system 29. The exhibition support system 29 which received this price data of estimated sold price transmits exhibition data including the price data of estimated sold price (suggested sold price) in contract expiration data to the bid system 12. Based on the received exhibition data, the bid system 12 selects an optimal buyer from retail such as an overseas bid hall, a domestic bid hall the bid hall on web using the Internet, an auction, a dealer, and the like, and when the domestic bid hall was selected, the bid system 12 sends exhibition data to the bid hall system.

Next, a resale vehicle data flow sold by bid is explained.

The resale vehicle data sold by bid is sent to the resold vehicle database 14 from the bidhall system 16. The resale vehicle data sent to the resold vehicle database 14 is periodically used for the estimated sold price calculation system 15, and periodically transmitted to the use side vehicle resold price analysis system 21 as updating data.

Next, the renewal of data by the vehicle resold price analysis systems 10 and 21 is explained.

First, the vehicle type database 13 additionally updates the vehicle type data concerning new vehicle type, whenever the new vehicle type newly produced is announced or produced. The new vehicle type includes the case where a form authorization number is changed. The data stored in the vehicle type database 13 is periodically used for the estimated sold price calculation system 15, and this data is transmitted to the use side vehicle resold price analysis system 21 as updating data periodically or when the data was renewed. The estimated sold price calculation system 15 is also renewed by new data periodically, module such as an updated correlation equation is sent to a use side vehicle resold price analysis system 21 as updating data.

Data of the leasing contract database 28 is used for various analysis by the remaining value simulation system 23.

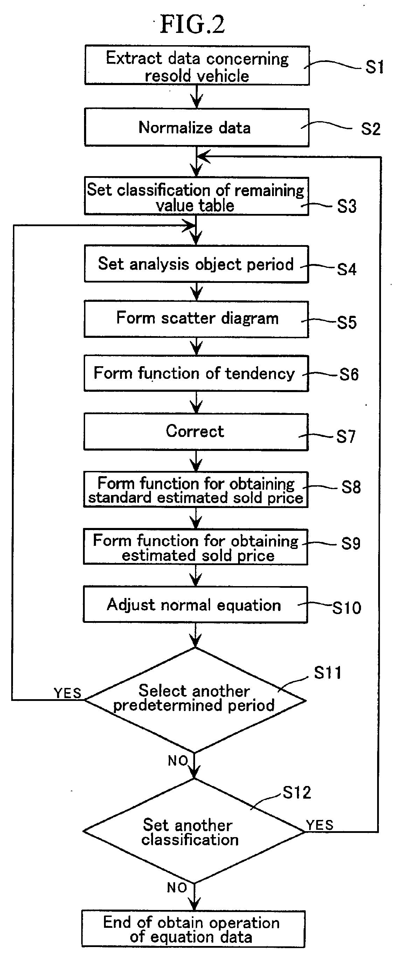

Next, one embodiment of the obtaining method of the remaining value calculation equation used for analysis of vehicle resold price is explained using Figs.2 to 8.

Fig.2 is a processing flowchart showing the obtaining method of a remaining value calculation equation.

First, in a first step, the sales track record data concerning resold vehicle is prepared, and predetermined data concerning resold vehicle is extracted (S1).

The data extracted here is data concerning resold vehicle such as vehicle type data, using contract year, expiration year of using contract, using contact period, new vehicle price, sold price after expiration of using contract, and mileage at the time of resale. Vehicle type data is data which specifies vehicle such as maker name, vehicle type name, authorization model, vehicle shape, displacement volume, fuel, a shift, drive system, the number of doors, and a grade. The using contract year, the expiration year of using contract, and using contact period are data determined by the using contract. All these data should not necessarily be data, only if contact period, contract time, or contract expiration time can be judged together with other data such as first registration year. Data such as a vehicle type name, authorization model, displacement volume, a vehicle shape, fuel, a shift, a drive system, the number of doors and equipment, and a grade and a grade option can be presumed from the model specification number and classification identification number which are given in vehicle to determine the weight tax. Therefore, the model specification number and the classification identification number can also be used as data instead of these individual data. It is preferable that data such as a vehicle body number, first registration year, registration number and an automobile inspection term day indicated in the automobile inspection certificate is included. The new vehicle price is a standard selling price when the vehicle is new. Although the standard selling price in the area used as a standard is used when the standard selling price is different depending upon areas, a regional gap may be taken into consideration. Not only the standard selling price, but also a street price can be used. When a new vehicle has various equipment at the time of delivery of the vehicle such as an air-conditioner and a navigation system, since the vehicle value changes with these equipment, it is desirable to deal with the selling price including these equipment article as a new vehicle price.

A predetermined period during which data is extracted is determined in consideration of business, trend of a market, cycle of goods, parameter of data and the like. That is, it is preferable that the period is set shorter as the business or trend of market is greater. Concerning the cycle of goods, the period may be set longer if the cycle period is longer. Concerning the data parameter, it is important that sufficient number of parameters exist so that statistics processing can be carried out. For example, sale day in which sold data (bid fixture data) is within last two years is extracted.

The actual use data concerning goods is data concerning the use state concerning a subject article, and in the case of a vehicle, the use data is situation data such as a crack, a hollow, a paint state in addition to besides mileage. This actual use data includes user classification of personal, corporation, and even in the case of the corporation, lease, rental and the like. The actual use data may be data concerning using period, an using condition, purpose of use or equipment article and attached fixtures which were added during the using period. For example, in the case of personal computer, equipment apparatus and the like, the presence or absence of the software which operates these apparatus has value as actual use data.

Next, data is normalized as a second step (S2). The deviation of data is first corrected in order to normalize data. In order to eliminate the deviation of data, data is extracted at random. If there is deviation, the cause of deviation is taken into account, and data selection is corrected theoretically or data is added.

Unsuccessful bid vehicle and a non-sent vehicle are taken into consideration for normalizing data. That is, after usable-years expiration, unsuccessful bid vehicle and the non-sent vehicle whose resale was not completed are considered as a risk, and are eliminated (deleted) from data object. It is preferable to total unsuccessful bid data such as unsuccessful bid vehicle and a non-sent vehicle for every vehicle type, and to compute unsuccessful bid rate according to characteristic of goods or market.

Next, as a third step, a classification setting of a remaining value table is performed in consideration of the goods characteristic or market (S3). That is, resold goods are classified according to the characteristic of goods or market. In this embodiment, vehicles are classified into one classification according to a use of vehicle such as riding, business, cargo and a bus, or a vehicle shape such as a sedan type, a hatchback type and a one box type, and one classification is selected. Then, data with which vehicle uses is classified into riding, for example is extracted.

Next, as a fourth step, the analysis object period to be analyzed is set (S4). For example, analysis object period is classified according to lease period and classified into some category. Some periods having large data parameters are selected as representative periods. When using periods are varied largely or continuous, a suitable period is selected in consideration of classification of the category or period of cycle of goods. For example, a lease expiration vehicle of three, four or five years is selected from the past sold data, and data having elapsed period of 35 to 37 months at the time of sale is extracted from three year lease expiration vehicle as representative period.

Next, as a fifth step, items in the sold data which can be known or items which can be set at the time of sale are analyzed from various angle, and those having correlation of positive/negative are picked up to form a scatter diagram (S5).

Concerning vehicle, the elapsed period or the using period from first registration year, vehicle type, popularity index which is determined according to the vehicle type, new vehicle price, sold price at the time of resale, mileage at the time of resale, and actual use data other than mileage is picked up as items, and correlation between respective items can be taken into account.

It was found from actual analysis that a relation between new vehicle price and sold price or between new vehicle price and remaining value rate obtained by dividing sold price by new vehicle price, a relation between mileage and sold price or between mileage and remaining value rate obtained by dividing sold price by new vehicle price, and a correlation between vehicle type data, popularity index data determined according to vehicle type or sold price has high correlation.

Here, concerning goods, it is possible to pick up selling time or using period, selling price, the sold price at the time of resale, and the actual use data at the time of resale as item, and to take the correlation between them into consideration. In these items, it is desirable to take into consideration correlation between selling price and sold price or remaining value rate obtained by dividing sold price by selling price, correlation between actual use data and sold price or remaining value rate obtained by dividing sold price by selling price, and correlation between vehicle type data or popularity index data determined according to vehicle type or sold price.

A scatter diagram formed in this manner is shown in Figs .3 and 4.

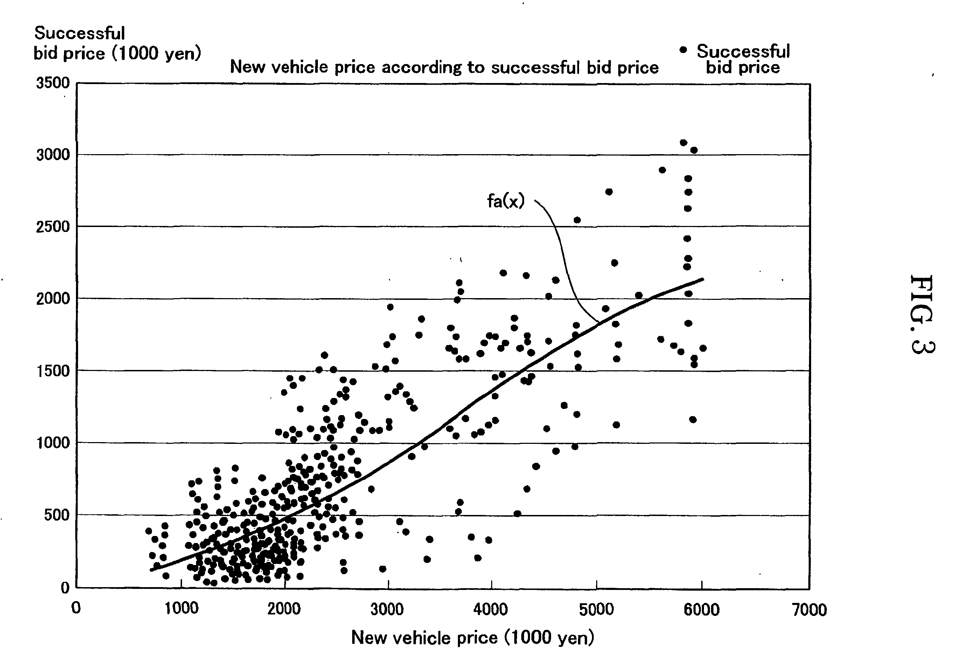

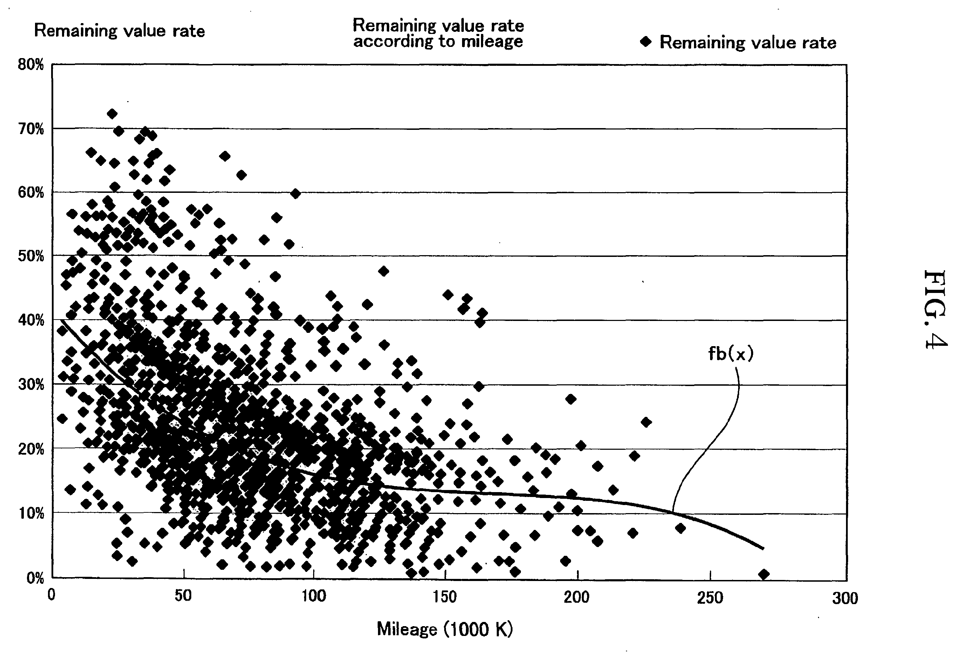

In this embodiment, the data extracted at the fourth step (S4) is used, and the scatter diagram shown in Fig. 3 in which X-axis shows new vehicle price and Y-axis shows sold price, and a scatter diagram shown in Fig.4 in which X-axis shows mileage and Y-axis shows sold remaining value rate are formed respectively.

Next, as a sixth step, an approximation curve (normal equation) is formed from each scatter diagram, and a tendency is formed into function (S6).

In this embodiment, the approximation curve (normal equation fa (x), fb (x)) is formed from Figs.3 and 4, respectively, and a tendency is formed into function to obtain equation data.

Here, fa (x) is equation data showing correlation between new vehicle price and sold price, and fb (x) is equation data showing correlation between mileage and remaining value rate obtained by dividing sold price by new vehicle price.

Next, as a seventh step, corrected equation data is obtained using the other normal equations (S7). With this corrected equation data, influence is eliminated from the obtained normal equation, and normal equation which is more precise concerning correlation of XY is obtained.

Specifically, average new vehicle price and average mileage of the entire data C3 are calculated first. Then, the average distance conversion sold price and average new vehicle price conversion sold remaining value rate are obtained by the following equation using this average new vehicle price and average mileage:

The average distance conversion sold price = fa (new vehicle price) - fb (real mileage) ∗ [new vehicle price] + fb (average mileage) ∗ [new vehicle price]

Average new vehicle price conversion sold price remaining value rate = fb (real mileage) - fa (new vehicle price) / [new vehicle price] + fa (average new vehicle price) / [a new vehicle price]

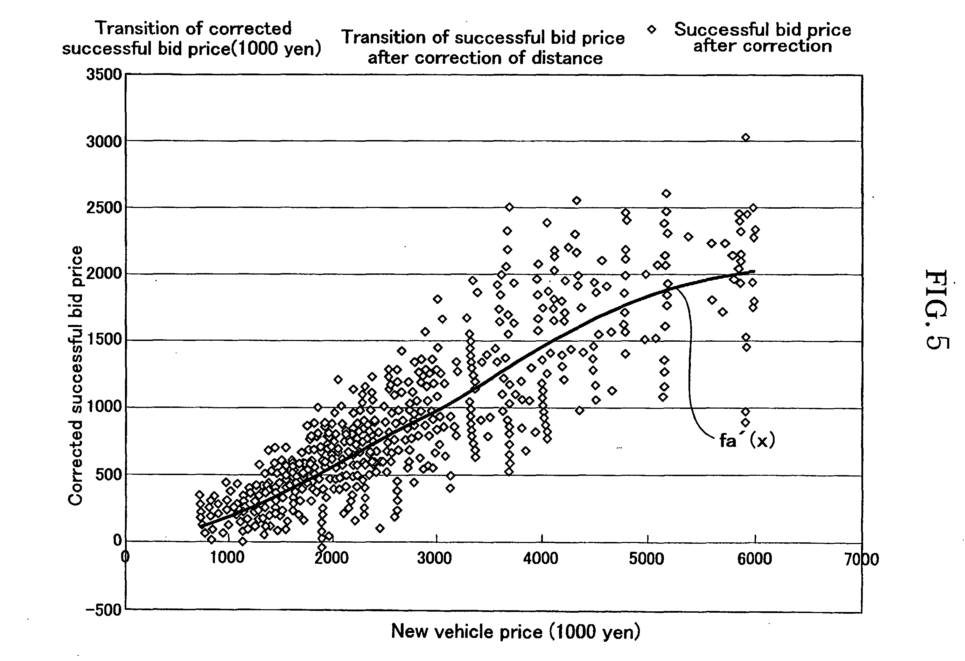

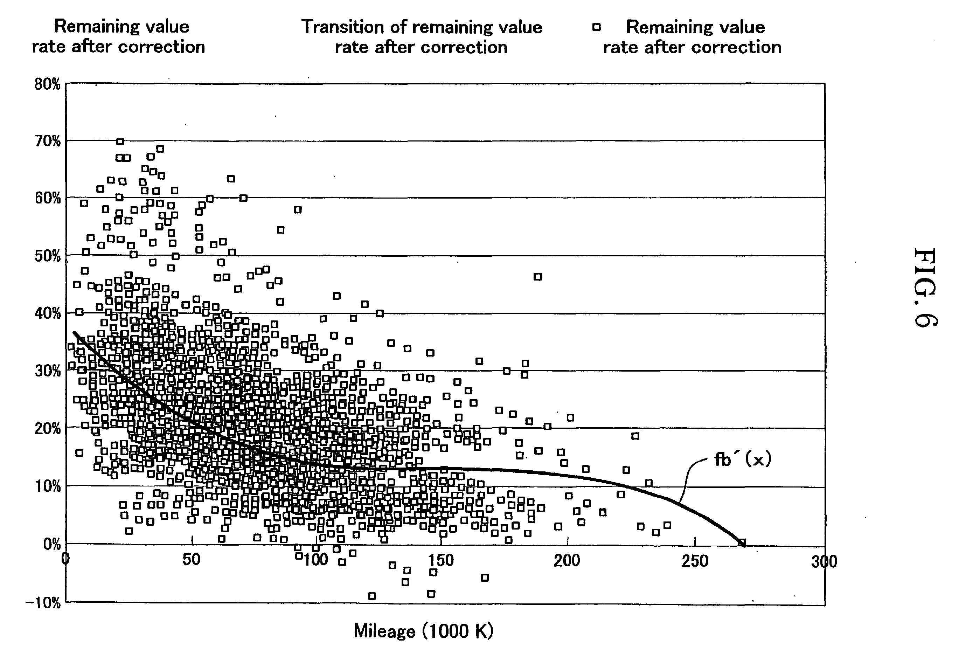

A scatter diagram shown in Fig.5 in which X-axis shows new vehicle price and Y-axis shows average distance conversion sold price, and a scatter diagram shown in Fig. 6 in which X-axis shows mileage and Y-axis shows average new vehicle price conversion sold remaining value rate are formed, an approximation curve (normal equation fa' (x), fb' (x)) is formed by regression analysis concerning correlation of average value from Figs.5 and 6, and a tendency is formed into function.

Here, the normal equation fa' (x) is corrected equation data in which average mileage is taken into consideration, and fb' (x) is corrected equation data in which the average new vehicle price is taken into consideration.

Next, as an eighth step, using normal equation obtained in the seventh step, and the standard estimated sold price is obtained from the new vehicle price of sold data and mileage by calculation (S8).

The standard estimated sold price can be obtained by the following equation:

Standard estimated sold price = fa' (new vehicle price) + fb' (real mileage) ∗ [new vehicle price]-k

wherein, k is a distance constant determined by the following equation:

k(distance constant) = fb (average mileage) ∗ [a new vehicle price]

Although this standard estimated sold price can also be made into estimated sold price, more precise estimated sold price can be obtained by further classifying goods according to characteristic/market.

Next, as a ninth step, function is formed for obtaining estimated sold price (S9).

First, goods are divided and grouped according to characteristic/market, and this is defined as a group of the remaining value rate table.

A difference between actual sold price and theoretical standard estimated sold price is obtained, and remaining difference is allowed to reflect according to group. That is, value or popularity obtained by characteristics of each group which can not be compensated only by the analyzed result is taken into consideration.

Specifically, theoretical standard estimated sold price/new vehicle price is subtracted from actual sold price/ new vehicle price, a difference between actual sale remaining value rate and theoretical sale remaining value rate is obtained, and they are averaged and ranked in the decreasing order in positive direction.

Namely, each (sold price-standard estimated sold price) of the data extracted at the fourth step/new vehicle price = RZ is calculated. RZ is made as deviation here and the sold price-standard estimated sold price is set to Z.

Then, the data extracted in the fourth step is classified according to the vehicle type and then according to the vehicle shape, and standard deviation (HRZ) is obtained for RZ which was classified according to vehicle shape. Then, (RZ+HRZ) is obtained from (RZ-HRZ) according to vehicle shape and vehicle type, and average deviation (ARZ) of RZ (deviation) is obtained. Then, groups according to vehicle type and vehicle shape are formed into indexes in decreasing order of the average deviation (ARZ) in the positive direction, thereby obtaining popularity data.

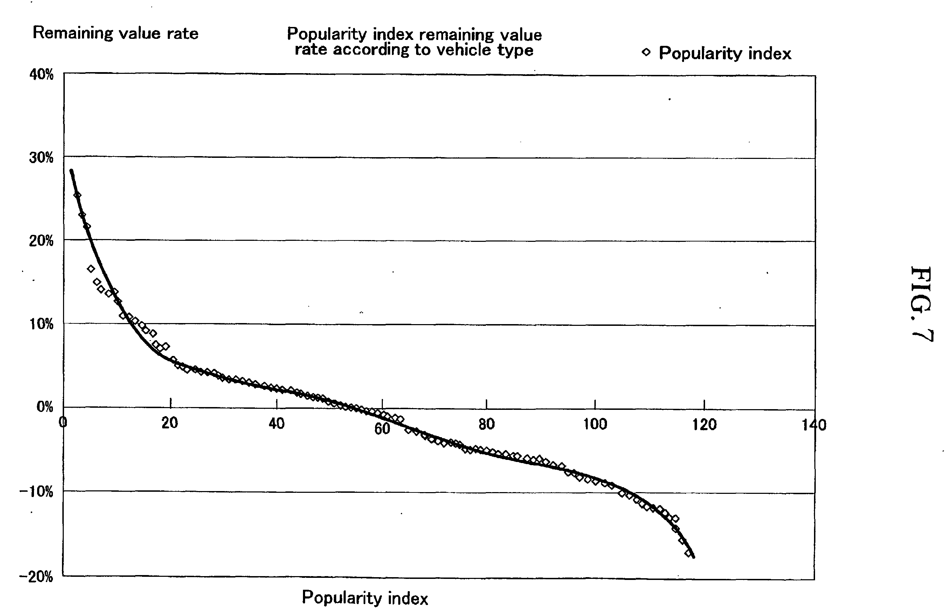

A scatter diagram shown in Fig.7 in which X-axis shows rank and Y-axis shows ARZ for the popularity index data is formed, and normal equation (fc (x)) is obtained by regression analysis concerning correlation of average value.

Next, normal equation is adjusted as a tenth step (S10). The normal equation is adjusted by judging a difference of a degree of wear which is caused by a factor that can not be known or set at the time of sale while utilizing dispersion of sold price/new vehicle price in the same group.

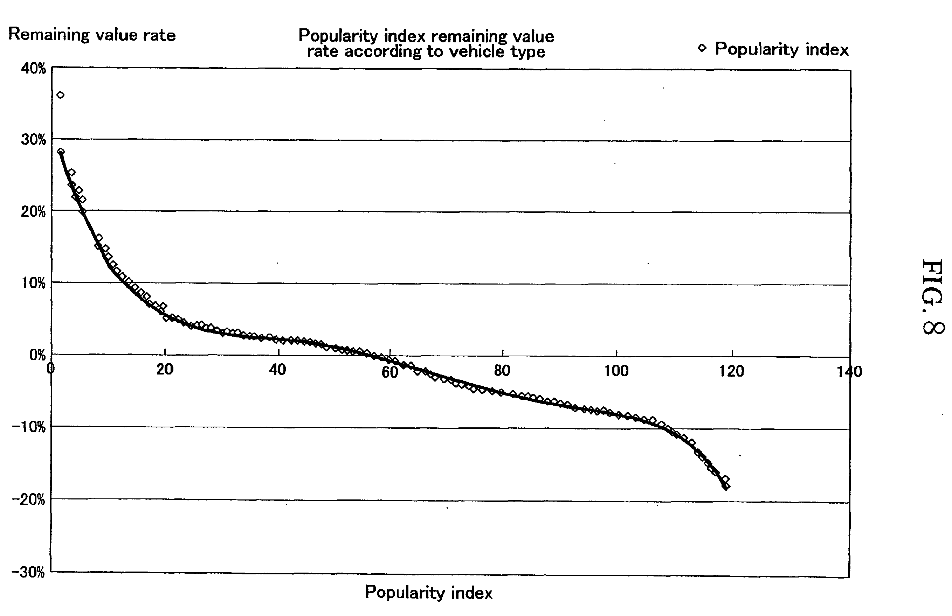

More specifically, it is assumed that standard deviation = difference of consumption degree ≈ assessment, and when the consumption degree at the time of return is previously assumed, the deviation value and assessment point are associated with each other, and this association is allowed to be reflected to the remaining difference. When the consumption degree at the time of return is not previously assumed, a risk hedge is taken into consideration, and it is ranked down with a constant criterion (Fig.8).

That is, if it is assumed that the degree of standard deviation = difference assessment of consumption degree, and if the assessment point 2 is defined as the deviation value 45 for example, it is possible to obtain remaining value rate (a value given from fc (x) is deviation value 50) of the deviation value 45 from the assessment estimated point 2. If the deviation value 47 is defined as a standard as a whole for the risk hedge, profit for three sections of the deviation value is secured theoretically. The processing for this risk hedge is adjusted to drop the rank such that the theoretical average actual sold price becomes substantially equal to actual average sold price.

Next, as an eleventh step, the necessity for selection of another predetermined period is judged (S11) That is, concerning a representative period different from the already selected classification, when it is necessary to obtain function, the processing is returned to the fourth step, and the representative period is again set. When another representative period need not be set in the classification of the already selected remaining value table, the processing is proceeded to a twelfth step.

Next, the necessity for another classification setting is judged as the twelfth step (S12). When it is necessary to change the classification of the already selected remaining value table and to obtain a function concerning the other classification, the processing is returned to the third step and another classification is set again. If a setting of another classification is unnecessary here, acquisition of equation data is ended.

When a new model needs to be added, it is compared with the existing model, the popularity index of the synthetic nearest model is applied based on the vehicle type or popularity index which are considered to be an equivalent class from the vehicle type use and new vehicle price. As one concrete method, when new vehicle type is added, the popularity index of the group according to vehicle type and vehicle shape which is assumed to be equal to each other with reference to HRZ or ARZ according to the vehicle type and vehicle shape. The new vehicle type includes change in vehicle type when the form authorization number is changed.

The estimated standard sold price in arbitrary period is calculated by obtaining the estimated standard sold price from the representative period which was subjected to statistics analysis during the nearest period before or after this arbitrary period and by determining an equation on the assumption that during this period they are in proportion. When the representative period exists only one of before and after the arbitrary period, two representative periods are selected from one of before and after side of the arbitrary period on the side where the representative period exists, and the calculation is carried out based on the assumption that the three periods are proportional to each other.

Concerning sampled period, if condition which was picked up in a group of remaining value table and subjected to regression analysis is given, it is possible to output the estimated standard sold price.

More specifically, if data such as a new vehicle price, estimated mileage, and a vehicle type (rank) is given to the normal equation which was picked up in the group of remaining value table and subjected to regression analysis, the estimated sold price can be obtained.

It is possible to obtain the estimated standard sold price by the following equation:

Estimated standard sold price = fa' (new vehicle price)

+ fb' (real mileage) ∗ [new vehicle price]-k+ ARZ according to vehicle type, vehicle shape group $*$ (a new vehicle price] + HRZ /10 of vehicle type and vehicle shape group $*$ ((specified deviation value) -50) $*$ [new vehicle price]

It is preferable to take into consideration a cause showing a constant tendency.

In the case of vehicle, there is distinctiveness in which evaluation is influenced by the model year. Therefore, in order to estimate the resale sold price of vehicle, it is important to reduce the price while taking into consideration the number of years elapsed from manufacturing year which is the distinctiveness. For example, if a vehicle whose first registration year is December and whose three year lease is expired is sold on next month, the number of years elapsed of the vehicle is four. Thus, in the case of goods whose values are evaluated with year, a fact that sold price is slightly reduced should be taken into consideration.

Since the estimated standard sold price is a pure sold price, it is desirable to add, as remaining value, indirect costs such as sale cost and sale profits, or strategic profits such as strategy goods, and to determine increased or decreased price if needed.

It is desirable to increase or decrease a price by deviation value conversion using distribution and standard deviation of the data classified according to group as a risk hedge of the estimated standard sold price.

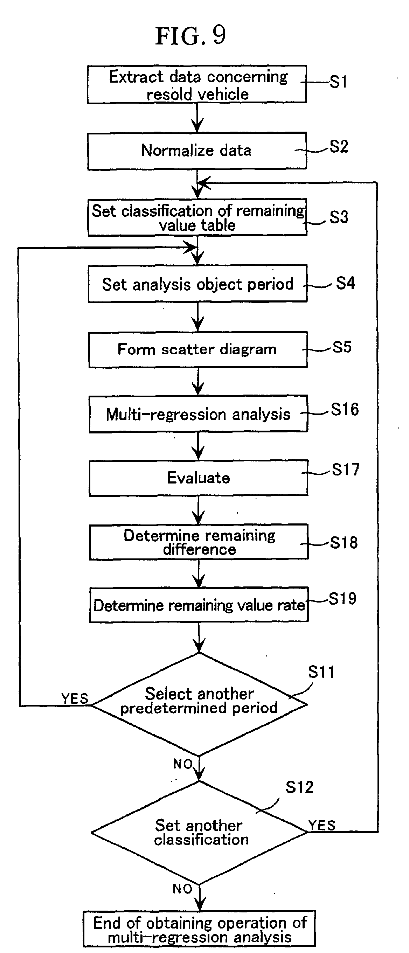

Next, another embodiment of the obtaining method of the remaining value calculation equation used for analysis of a vehicle resold price is explained using Fig.9.

Fig.9 is a processing flowchart showing the obtaining method of the remaining value calculation equation. The same steps as those in the embodiment shown in Fig.2 are designated with the same symbols, and explanation thereof is omitted.

Although a scatter diagram may be formed as in the above embodiment in a fifth step, items may be selected by correlation-analyzing data which seems to influence the remaining value rate.

In a sixth step, multi-regression analysis is carried out for a picked up item, correlation is confirmed, and a suitable item is selected (S16).

Sold data in which sale day (bid fixture data) is within last two year was extracted and subjected to multi-regression analysis. As a result, correlation could be found as to the number of elapsed months, monthly mileage, new vehicle price, displacement volume, light automatic classification (660cc or less, or not), automobile-tax classification (luxury vehicle =3000cc or higher, or not), vehicle use classification (riding or not), new or old classification (the number of elapsed months is 30 or less, or not), fuel (gasoline or not), and ABS equipment or not. Also, there was a tendency that specific vehicle type classification (here, whether or not vehicle type and vehicle shape show a special tendency such as popular Corolla or Sprinter for example) should be taken into consideration.

Here, the number of elapsed months, monthly mileage, new vehicle price, and displacement volume are defined as independent variables, and light automatic classification, automobile-tax classification, vehicles shape classification, the old/new classification, fuel classification and specific vehicle type classification are defined as dummy variables of "1" or "0".

Regression analysis is carried out for each selected item and remaining value rate, and if necessary, data is formed into index (by logarithm, involution, index or the like) so that data is well applied to straight regression. For example, the number elapsed months is formed into index by logarithm.

It is assumed that (raw data average value) / standard deviation = standardization data, and data is defined as standardization data on statistics.

Correlation between the selected item and remaining value rate is obtained by multi-regression analysis, and numeric value of partial regression coefficient and a section (constant clause) are obtained.

As a seventh step, evaluation is made whether the result is reliably or not by determination coefficient, multi determination coefficient, t test and the like (S17).

As an eighth step, the numeric values of partial regression coefficient and section (constant item) are applied to multi-regression equation, theoretical remaining value rate is selected from the selected item, and a difference with respect to the actual remaining value rate is obtained as actual remaining value difference (S18).

The remaining value rate is determined as a ninth step (S19).

The average and standard deviation of remaining difference are obtained according to category, and the obtained value is defined as a theoretical remaining value rate. The standard deviation is defined as a variable element of sold price due to a factor which can not be estimated beforehand, or a variable element of sold price due to a factor in which regularity can not be grasped at the current time, and the standard deviation is taken into account from using method, using place, user and the like. The risk hedge is taken into consideration in the standard deviation, the risk hedge is added to the standard deviation, and the resultant is added to or subtracted from the theoretical remaining value rate.

For example, a difference of the degree of wear is defined in five stages (1 = deviation value 40, 2 = deviation value 45, 3 = deviation value 50, 4 = deviation value 55, 5 = deviation value 60) and this is defined as estimated assessment point, the theoretical remaining value rate is defined as deviation value 50, and this is added to or subtracted from the theoretical remaining value to obtain the remaining value rate.

Since the adding manner of new mode vehicle type is the same as that of the above embodiment, explanation thereof is omitted.

Using the multi-regression equation, popularity index according to category, standard deviation, and the vehicle type database obtained by the above steps, it is possible to calculate the sold price after contract expiration from determination of vehicle type from the vehicle type database, the number of the contract elapsed months, estimated monthly mileage, new vehicle price, and estimated assessment point.

The popularity index, the standard deviation, the light vehicle classification, automobile-tax classification (luxury car), and vehicle shape classification according to category can be obtained from the vehicle type database, and the old/new classification can be obtained from the number of the contract elapsed months by computing processing.

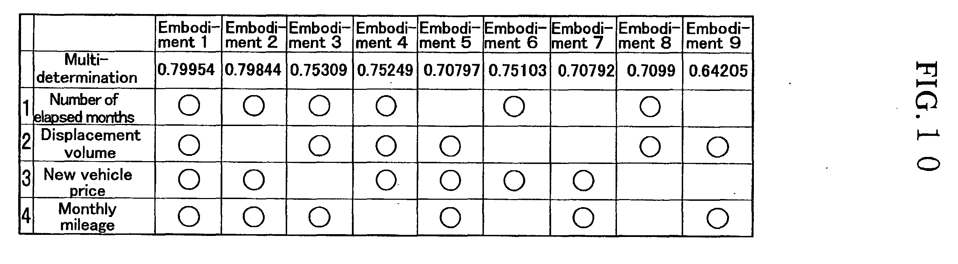

The sold data in which sold day is within the last two years (the number of data is 35,000) is extracted and subjected to multi-regression analysis. Fig.10 shows multi-determination index according to considered item of the result. As precondition, light automatic classification, automobile-tax classification, vehicle use classification, old/new classification, fuel classification, and specific vehicle type classification are taken into account as dummy variables. The selected items are elapsed months, displacement volume, new vehicle price, and monthly mileage.

In an embodiment 1, all of elapsed months, displacement volume, new vehicle price, and monthly mileage are taken into consideration. In an embodiment 2, elapsed months, new vehicle price, and monthly mileage are taken into consideration. In an embodiment 3, elapsed months, displacement volume, and monthly mileage are taken into consideration. In an embodiment 4, elapsed months, displacement volume, and new vehicle price are taken into consideration. In an embodiment 5, displacement volume, new vehicle price, and monthly mileage are taken into consideration. In an embodiment 6, elapsed months and new vehicle price are taken into consideration. In an embodiment 7, new vehicle price and monthly mileage are taken into consideration. In an embodiment 8, elapsed months and displacement volume are taken into consideration. In an embodiment 9, displacement volume and monthly mileage are taken into consideration.

As shown in Fig.10, the embodiment 1 in which four items are taken into consideration has the highest rate of coincidence, but concerning the embodiment 2, the rate of coincidence is close to that of the embodiment 1 irrespective of three items.

The embodiments 3, 4 and 6 shows high multi-determination indexes. Especially, the embodiment 6 shows high coincidence irrespective of two items.

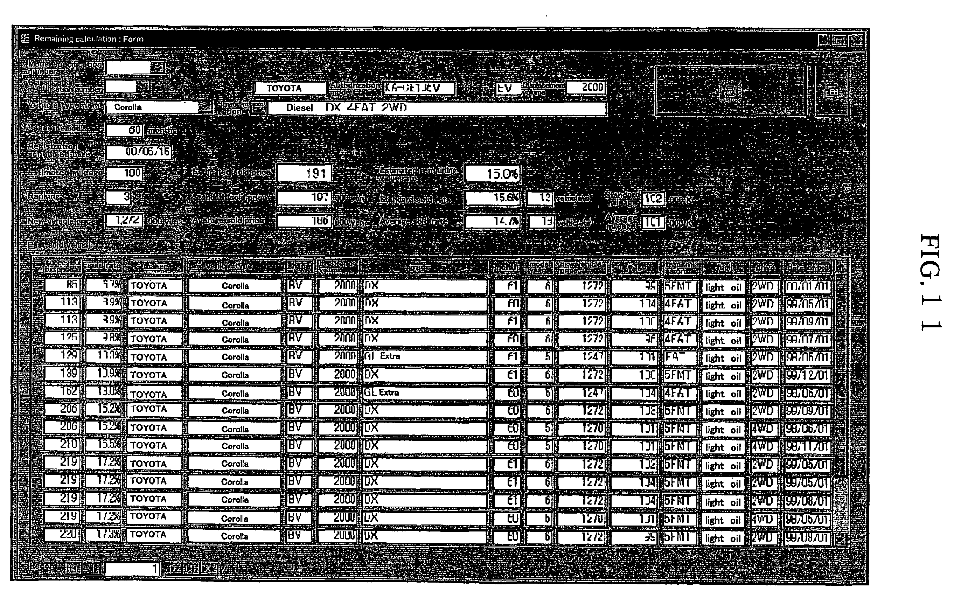

Next, analysis systems such as estimation of the sold price, remaining value profit and loss and property and remaining value determination of new contract vehicle are explained using Figs. 11 to 18. Figs.11 to 18 are screen images of this system.

Fig.11 is a screen image which obtains estimated sold price and estimated remaining value rate concerning a specific vehicle for example in a contact period or a specific vehicle at the time of new contract.

In this drawing, by inputting the vehicle type name "Corolla", specification "diesel DX 4FAT 2WD", lease period "60" months, registration scheduled day "00/05/15", and estimated mileage "100"000km. ranking "3" and the new vehicle price of "1, 272" 000 yen, the following information is output and displayed:

estimated sold price "191"000 yen, standard sold price "197"000 yen, average sold price "186"000 yen, estimated remaining value rate "15.0%", standard sold rate "15.6%", average sold rate "14.7%", the number of resold vehicles "12" which is object of the standard sold price and the standard sold rate, the standard distance "102"000 km of the number of resold vehicles "12", the number of resold vehicles "18" which is object of the average sold price and the average sold rate, average distance "101"000 km of the number of resold vehicles "18", and past sold vehicles (the price of a successful bid, the sold rate, maker, vehicle type, use of vehicle, displacement volume, grade, the number of months, model year, new vehicle price, mileage, transmission, fuel, drive, fixture year and month).

Vehicle type name "Corolla" and specification "diesel DX 4FAT 2WD" can be selected and input in a pull down manner. Although a maker name "Toyota", authorization model "KA-CE1O6V", a vehicle shape "BV" and displacement volume "2000" are displayed by inputting "Corolla" and specification "diesel DX 4FAT 2WD" in the drawing, it is possible to input the maker name "Toyota", authorization model "KA-CE106V", a vehicle shape "BV", and displacement volume "2000", instead of "Corolla" and specification "diesel DX 4FAT 2WD". It is also possible to input a model specification number and a classification identification number, instead of "Corolla" and specification "diesel DX 4FAT 2WD".

The estimated mileage "100"000km may not be input and may be linked with lease period "60" months and may be output. The new vehicle price "1,272"000 yen is also an item which can be determined by vehicle type or specification, and it can be output and displayed from database which is associated with vehicle type and the like beforehand. Although the ranking "3" is assessment evaluation, this is a classified according to user such as a lease person, use ground or purpose of use (business, private, and the like), for example.

The "estimated sold price" and "estimated remaining value rate" are calculated and output using equation data and multi-regression equation which were previously obtained by the above embodiment. On the other hand, "average sold price", "average sold rate" and "average distance" are calculated and output from the actual data of the resold vehicle which coincides with a vehicle which was specified by the "vehicle type name." This drawing shows that the number of corresponding vehicles is 18. Whereas, "standard sold price", "standard sold rate" and "standard distance" are obtained by correcting deviation of data as (actual data-average value) / standard deviation. This drawing shows that the number of corresponding vehicles after correction is 12.

Although it is enough to show estimated sold price or estimated remaining value rate as the output, if both the estimated sold price and estimated remaining value rate are shown, and there is effect that it is easy to grasp the remaining value and the like. If standard sold price, average sold price, standard sold rate, average sold rate and the like are shown, it is easy to grasp the precision of the estimated sold price and the estimated remaining value rate and it is possible to grasp presence or absence of distinction caused by vehicle type.

By indicating the past sale vehicle (price of a successful bid, sold rate, maker, vehicle type, vehicle shape, displacement volume, grade, the number of months, model year, new vehicle price, mileage, transmission, fuel, drive, holding year) in a form of a list, it is possible to confirm a factor making a price higher or lower than the average value.

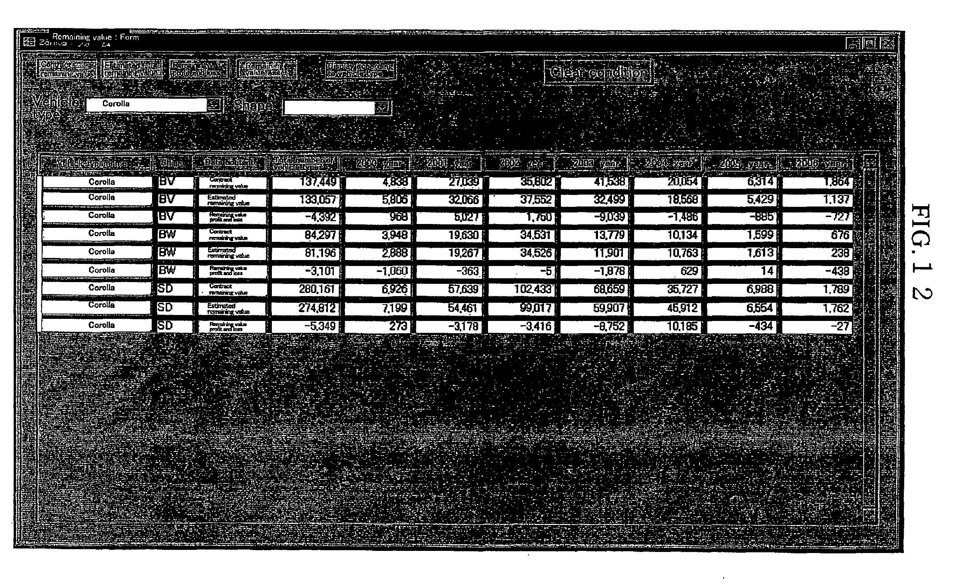

Fig.12 is a screen image which estimates remaining value profit and loss concerning a specific vehicle for example in a contact period based on estimated remaining value.

This embodiment estimates the market at the time of contract expiration on the basis of the current market, and sets the relative value by relative evaluation. The estimated standard sold price at that time is obtained from non-sold contract data, the obtained estimated standard sold price is multiplied by a relative value at the time of contract expiration, thereby obtaining a remaining value profit and loss by the contract remaining price and estimated standard sold price.

More specifically, the estimated standard sold price at that time is obtained from new vehicle price of non-sold contract data, estimated mileage, vehicle type name (estimated assessment point at the time of return), and the obtained prices is multiplied by the relative value to obtain the estimated standard sold price at the time of contract expiration. Then, the obtained prices are arranged according to an appropriate management units, goods characteristics/markets and vehicle type based on accounting unit by contract remaining price-estimated standard sold price, and remaining value profit and loss are obtained according to management units.

This figure shows "contract remaining value", "estimated remaining value" and "remaining value profit and loss" according to vehicle shape and year, concerning the vehicle type name "Corolla" in the current contract.

Here, "contract remaining value" is a remaining value set at the time of a contract, and "estimated remaining value" is a remaining value which was calculated and output using equation data and multi-regression equation which were previously obtained by the above embodiment. The "remaining value profit and loss" are difference between "contract remaining value" and "estimated remaining value", and if the remaining value profit and loss are close to zero, the remaining value profit and loss are the same as the remaining value set at the time of contract and the vehicle may be sold, which means that no profit and loss are produced.

For example, the drawing shows that "Corolla BV" whose contracts will be completed in 2000 is estimated to produce profits of "968", but "Corolla BV" whose contracts will be completed in 2003 is estimated to produce loss of "9039".

This drawing shows data classified according to vehicle type, all of contract vehicles may be objects, or specific maker name may be displayed. If dealer classification and salesman classification are registered in the database, profit and loss classified according to dealer classification and salesman classification can be output. Although it is not illustrated in this drawing, if all of the number of object vehicle are displayed, it is possible to know profit and loss of each vehicle.

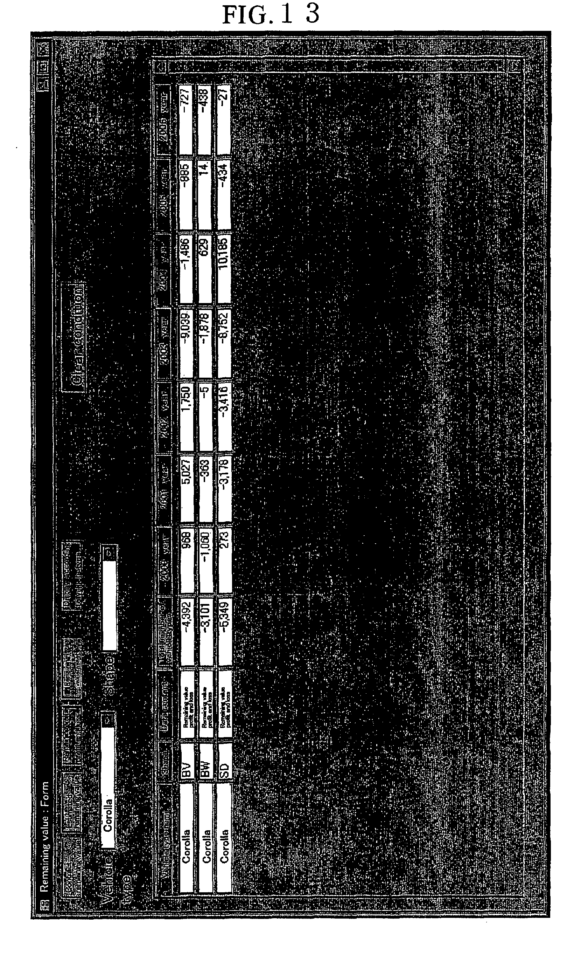

Fig.13 is a screen image which estimates the remaining value profit and loss classified according to vehicle type concerning the vehicles in contact period. As shown in this drawing, remaining value profit and loss are displayed according to vehicle type and vehicle shape. Thus, by displaying remaining value profit and loss according to vehicle type and vehicle shape, profit-and-loss situations of the respective vehicles can be compared with each other.

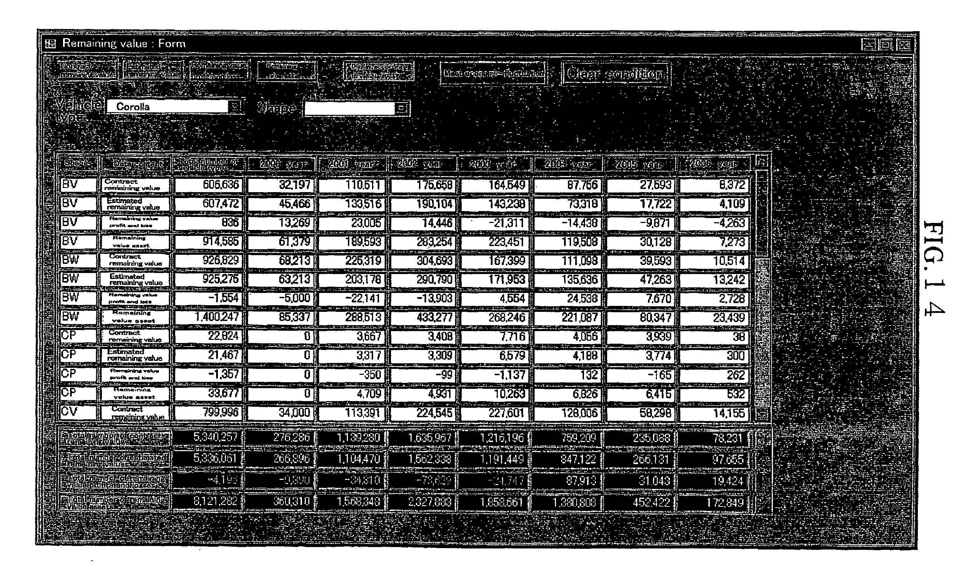

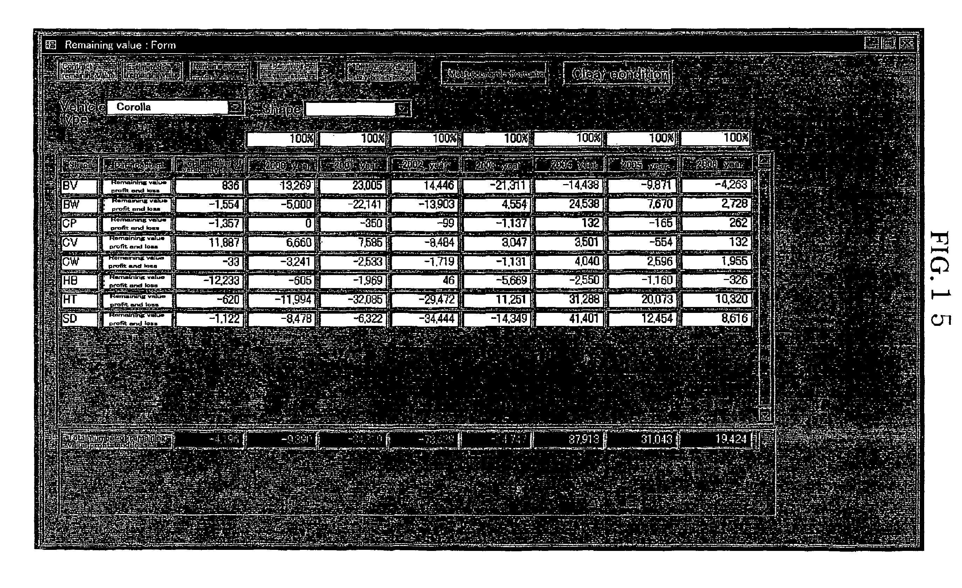

Figs. 14 and 15 are screen images which estimate remaining value profit and loss based on estimated remaining value concerning a specific vehicle in contact period, and are substantially the same as Fig.12.

Figs.14 and 15 are characterized in that the system can meet or accept economic-fluctuation. "100%" is displayed in each of upper columns of year indicating columns of "2000" to "2O06". When all of the indications are "100%", this means that economic fluctuation is not added.

In this economic fluctuation, it is also possible to display the variation rate based on other economic-conditions analytical data and the like, and this can be applied also to the respective estimated remaining values.

In addition, if future variable element is given to remaining value such as variation of future market, variation in sale amount and the like, the estimated standard sold price can be varied in each remaining value group (management unit, model type), and it is possible to simulate how the remaining value profit and loss will become. In such a simulation, it is desirable to simulate including future by giving the estimated sold volume (budget).

By the above simulation, it is possible to determine the optimizing direction.

That is, it is possible to determine whether remaining value profit and loss should be specified price, whether remaining value profit and loss should be secured as specified ratio, whether contract new vehicle price should be recovered at constant rate, whether the vehicle should be recovered at constant rate according to contract, or whether vehicle should be recovered at constant price according to contract.

When a remaining value group or a model (vehicle type) is specified in a range which gives the selling prospective number for every new vehicle price, the new vehicle price and the selling prospective number are given to every specified remaining value group or model (vehicle type). If the new vehicle price and the selling prospective number can be given to every remaining value group or model (vehicle type), the precision is enhanced. When the selling prospective number is not given, sales track record can be used instead.

The estimated standard sold price + adjusted price are set as remaining values according to management unit, remaining value table, remaining value group, or model (vehicle type) by calculation after the above condition was set. It is desirable to also take into consideration risk, profits, indirect cost and the like to be re-calculated for every the management unit period.

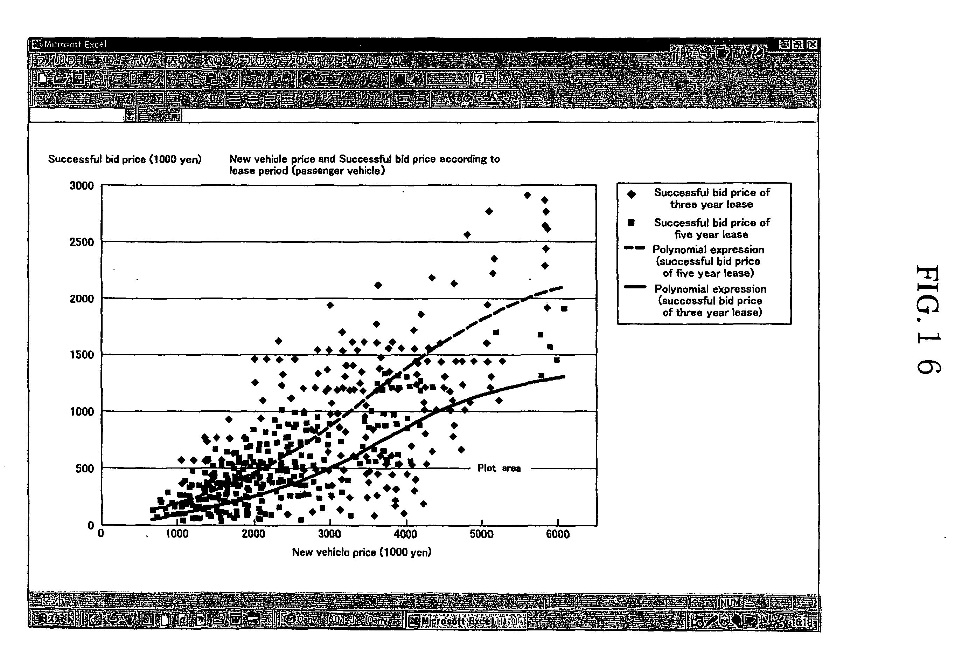

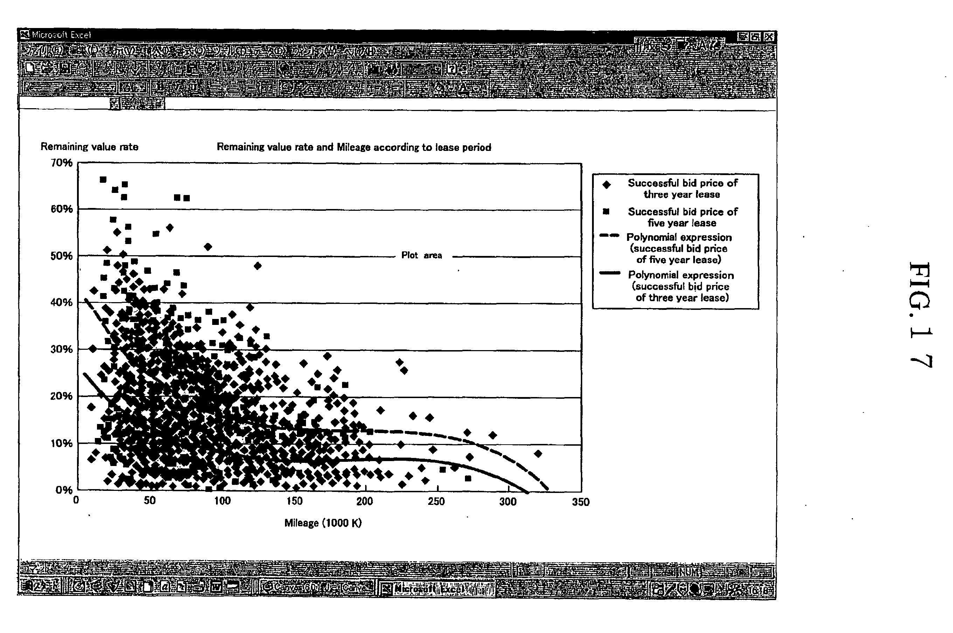

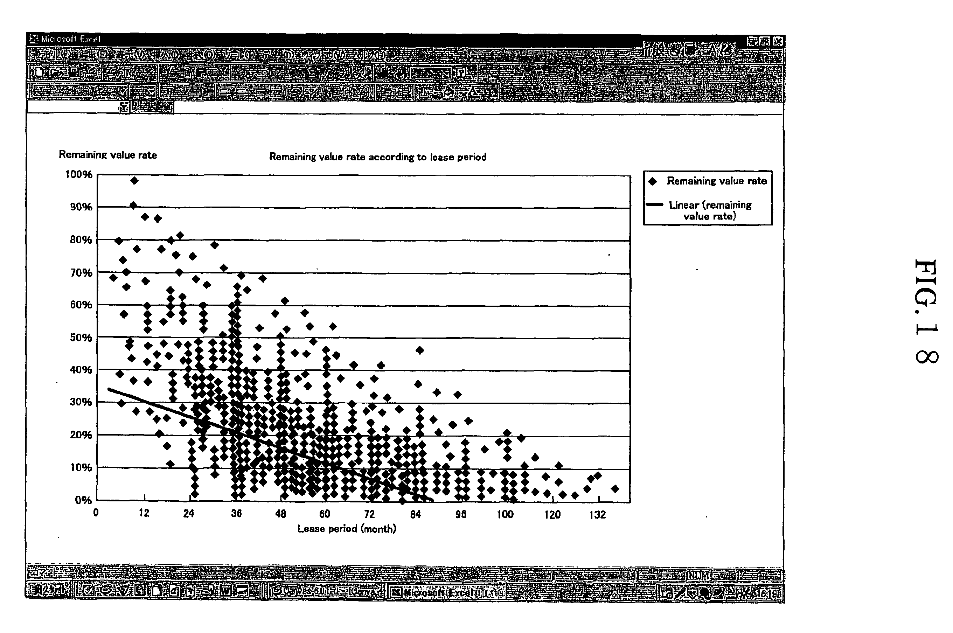

Figs.16 to 18 are screen images which obtain the entire tendency of estimated sold price and estimated remaining value. Fig.16 is a screen image showing a tendency of new vehicle price and successful bid price according to lease period. Fig.17 is a screen image showing a tendency of mileage and remaining value rate according to lease period. Fig.18 is a screen image showing a tendency of lease period and remaining value rate.

Fig.16 is a graph in which one of axes shows new vehicle. price and the other axis shows successful bid price. The graph shows actual data of new vehicle price and successful bid price concerning already resold vehicle, and correlation between new vehicle price and successful bid price. The correlation between new vehicle price and successful bid price and the actual data which is a basis of the correlation are shown with different color according to three year leasing and five year leasing. The successful bid price (sold price) may be a remaining value rate in which the sold price is divided by new vehicle price;

In the embodiment shown in Fig.16, it is possible to visually grasp correlation with respect to new vehicle price which is recognized as having large influence on sold price by experience from sold data concerning already resold vehicle, and it is possible to recognize objective estimated sold price concerning vehicle to be resold.

Fig.17 is a graph in which one of axes shows mileage and the other axis shows remaining value rate obtained by dividing the sold price by the new vehicle price. Fig.17 shows actual data of mileage and remaining value rate concerning already resold vehicles, and shows correlation between mileage and remaining value rate. The correlation between mileage and remaining value rate and the actual data are shown with different color according to three year leasing and five year leasing. The remaining value rate may be successful bid price (sold price)

In the embodiment shown in Fig.17, it is possible to visually grasp correlation of mileage which is recognized as having large influence on sold price by experience from sold data concerning already resold vehicle, and it is possible to recognize objective estimated sold price concerning vehicle to be resold.

Fig.18 is a graph in which one of axes shows lease period and the other axis shows remaining value rate obtained by dividing sold price by new vehicle price. Fig.18 shows actual data of mileage and remaining value rate concerning already resold vehicles, and shows correlation between mileage and remaining value rate. The remaining value rate may be successful bid price (sold price).

In the embodiment shown in Fig.18, it is possible to visually grasp correlation of lease period which is recognized as having large influence on sold price by experience from sold data concerning already resold vehicle, and it is possible to recognize objective estimated sold price concerning vehicle to be resold.

In Figs.3 to 8 which have already been explained in analysis of correlation also, if screen images obtaining the entire tendency of estimated sold price and estimated remaining value rate are displayed, the same effect as that explained above can be obtained.

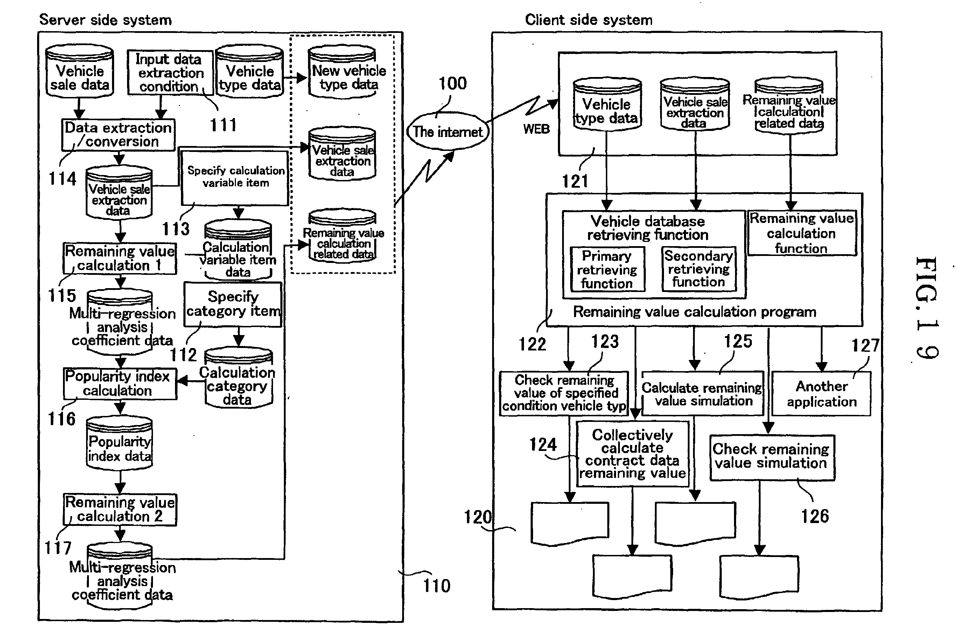

A system which uses a remaining value calculation program according to one embodiment of the invention is explained using the drawings. Fig.19 is a conceptual diagram for explaining an outline structure of the system using the remaining value calculation program according to the embodiment of the invention.

A server side system 110 and a client side system 120 are connected to each other through a communication circuit 100 such as the Internet.

First, the server side system 110 is explained. The server side system 110 periodically updates the remaining value calculation program and data used for the program, is provided with a function which distributes to each user, and comprises a remaining value equation calculation condition definition step, a remaining value equation calculation step and a distribution data creation step.

The remaining value equation calculation condition definition step carries out data extraction condition input process 111, category item specification process 112, calculation variable item specification process 113 and data extraction/conversion process 114, in order to define conditions of remaining value calculation.

In the data extraction condition input process 111, data extraction conditions which narrow down the vehicle sale track record data which is a basis of remaining value calculation are specified. Here, the vehicle sale track record data from the current date to last two years is object as data to be extracted. A predetermined period during which data is extracted is determined while taking into consideration business, trend of market, goods cycle, the number of data parameter and the like. That is, concerning the business or trend of market, if variation is large, it is desirable to set a period short. Concerning the goods cycle, if the cycle period is long, the period may be set long. Concerning the data parameter, it is important that sufficient number of parameters exist so that statistics process can be carried out. The item which can be registered into data extraction conditions is an item registered as vehicle sold data. Examples of the items are elapsed months, monthly mileage, new vehicle price, displacement volume, light automatic classification (660cc or less or not), automobile-tax classification (luxury vehicle =3000cc or higher, or not), vehicle use classification (riding or not), the old/new classification (elapsed months are 30 or less, or not), fuel (gasoline or not), and ABS is included, or not.

Here, examples of vehicle sold data are a maker name, vehicle type name, a use of vehicle, a vehicle shape, a vehicle type grade (a vehicle type name, a grade name), a authorization model, a popularly called model (a model specification number, a classification identification number), a transmission, a drive system, a displacement volume, the number of doors, capacity, burden, a engine model (motor model), the number of cylinders of engine, an engine mechanism, tire size, a turbo and supercharger, a roof shape, emission control, body size, body color, automobile-tax classification, weight tax, insurance class, a popularity index, sale-start time, sale-end time. The popularity index is an index which is ranked according to remaining value rate in the classification classified according to vehicle type. For example, when remaining value rates of Corolla and Civic are the same and remaining value rate of Sunny is lower than Corolla by two ranks, popularity index of Corolla is set to 25, popularity index of Civic is set to 25 and popularity index of Sunny is set to 22. A vehicle use is a classification classified according to use of vehicle, and it is classified into a passenger car, a van, a bus, a track, and the like. The system also includes data concerning resold vehicle such as using contract year, expiration year of using contract, using contact period, new vehicle price, sold price after expiration of using contract, mileage at the time of resale and assessment evaluation at the time of resale.

In the category item specification process 112, a category item for multi-regression analysis of remaining value calculation, a category item of two patterns for popularity index and an actually measured value (Y value) are specified. Here, as the category for multi-regression analysis, an item in which it is assumed that variable tendency is different with respect to calculation variable item for multi-regression calculation is defined in each of classifications 1 to 5, and a group is formed by a combination of defined items. For example, vehicle shape group is divided into three groups of SD/HT/HB/CP/CO, CW/PW and CV/BV, and the other group. Here, the vehicle shape group is a classification classified based on the number of doors or outward shape. For example, if a vehicle has 4 door + trunk, it is a Sedan (SD), if the vehicle has 2 door + tailgate (without 4 door specification), it is a hatchback (HB), if the vehicle has 2 door + trunk, it is coupe or sport (CP), if the vehicle has 2 to 4 door + tailgate or 4 door base + full bonnet, it is bonnet wagon (BW), if the vehicle has 3 - 4 door + tailgate or a semi cab over, it is cab wagon (CW). Fuel classification is classified based on whether the vehicle is a gasoline vehicle. Luxury vehicle classification is classified based on whether the average basic vehicle price of the same vehicle type name exceeds a predetermined price, for example, 2,500,000 yen. On the other hand, as the category for popularity index, an item in which it is assumed that variable tendency is similar but dependent variable is different is defined in each of category 1 to 5 with respect to the calculation variable item for multi-regression calculation. For example, vehicle type name/maker name, shape, and transmission classification (AT vehicle or not) are defined. As an actually measured value (Y value), the dependent variable is defined as an object item to be obtained, and either one of soldprice or sold rate is specified. The sold rate here is successful bid price/new vehicle price. Since values from classifications 1 to 5 and category 1 to 5 can be set arbitrarily by the server side system, it is possible to calculate this value from various angles with change in market environment.

In the calculation variable item specification process 113, the dependent variable item (calculation variable item) used by multi-regression calculation is specified. Independent variable, dummy variable and variable condition of dummy variable are specified. Here, the basic vehicle price (score value), displacement volume (score value), elapsed months (score value of LOG) and monthly mileage (score value) are used as the independent variable. On the other hand, light classification (whether the vehicle is light or not) and detailed classification of the number of years elapsed (whether the registration month is from November to December or not) are defined as dummy variable. As another dummy variable, it is possible to use automobile-tax classification, vehicle shape classification, old/new classification, fuel classification, and specific vehicle type name classification.

As calculation variable item which can be defined, there exists 20 items at the maximum that can be expressed with numerical value or decimal point, one of independent variable and dummy variable is specified. The independent variable is an item using item value of vehicle sale track record data by calculation as it is at the time of multi-regression calculation, and this item does not use a value as it is, and the value is converted into score value and calculated as dependent variable. With respect to the independent variable item, it is necessary to specify whether dependent variable is used as it is as definition item (score value), or whether the dependent variable is converted into LOG (LOG score value) and is used. The dummy variable is dependent variable which is defined as theoretical value by specifying conversion method (here, mileage is longer than 20, 000), and unlike the independent variable, the value is not converted into the score value.

In the data extraction/conversion process 114, the vehicle sale track record data which is a basis of remaining value calculation is extracted according to data extraction conditions. Conversion variable (dummy variable) in category item setting process and calculation variable item specification process is converted into data according to conversion condition.

A remaining value equation calculation step carries out multi-regression analysis process (calculating remaining value calculation equation) using two patterns, i.e., a pattern in which data having 17 elapsed months or more is object, and a pattern in which data having 42 elapsed months or less is object, in accordance with vehicle sold extraction data, calculation variable item data and calculation category data defined in the remaining value equation calculation condition definition step. A processing procedure is performed in order of a remaining value calculation 1 (multi-regression analysis calculation) process 115, a popularity index calculation process 116 and a remaining value calculation 2 (multi-regression analysis calculation) process 117.

In the remaining value calculation 1 process 115, average value, standard deviation and a score value are calculated based on the vehicle sold extraction data according tomulti-regression analysis category (according to category, hereinafter), and dummy variable track record data. As the average value, an average value of calculation variable items is calculated according to category. The average value is obtained by "SUM according to category (value of calculation variable item) /the number of data according to category. As the standard deviation, a standard deviation of the calculation variable item according to category is calculated. Using X=SUM ({value of calculation variable item according to category - the calculated average value according to category}$^2$), standard deviation is obtained by "$\sqrt{(X/}$ the number of data according to category)". As the score value (independent variable item only), a score value or LOG score value is calculated according to track record data (according to category/calculation variable item). The score value or LOG score value is specified by the calculation variable item specification process 113. The score value is obtained by "score value = (track record value of variable item - average according category) / standard deviation according to category". However, (track record value of variable item - average according category) is not an absolute value. LOG score value is equal to (track record value of LOG variable item - LOG value average according to category) / LOG standard deviation value according to category. However, track record value of LOG variable item - LOG value average according to category is not an absolute value. Since the score value or the LOG score value has arranged coefficient unit between independent variable items, the score value or the LOG score value is used as variable item of multi-regression analysis calculation. The multi-regression analysis counting is calculated under conditions that object actually measured data is used as vehicle sold extraction data, multi-regression analysis dependent variable is used as calculation variable item (score value or LOG score value is used as independent variable), and actually measured value (Y value) is used as vehicle sold extraction data (sold rate, or sold price).

In the popularity index calculation process 116, the multi-regression analysis coefficient data calculated by the remaining value calculation 1 process 115 is used for vehicle sold extraction data, and popularity index is calculated according to popularity index category (according to category, hereinafter) according to multi-regression analysis category. The calculation is carried out in order of remaining difference step, average value step, remaining difference standard deviation according to category step, and popularity index step. In the remaining difference step, the remaining difference is obtained by "track record sold rate (or successful bid price) - theoretical sold rate (or price of a successful bid)". In the average value step, the average value of the remaining difference is calculated according to category. It is obtained by "SUM(remaining difference) / the number of data according to category. In the remaining difference standard deviation according to category step, standard deviation of remaining difference is calculated according to category. The calculation standard deviation is used for ranking the conditions of remaining value calculation (user side function). X=SUM ({remaining difference value according to category - average value according to the calculated category}$^2$) is used, and the standard deviation is obtained by $\sqrt{(X/}$the number of data according to category). At the popularity index step, the average value of remaining difference is calculated according to popularity index category. The popularity index is "SUM (the calculated remaining difference) according to category / the number of data according to popularity index category". The calculated value is added to each track record data as the popularity index value, and this is used as a variable item of remaining value calculation 2 (multi-regression analysis). However, a value of the popularity index used by the remaining value calculation (user side function) differs depending upon the number of data according to popularity index category.

In the remaining value calculation 2 process 117, a variable obtained by adding popularity index item to scoring calculation variable item calculated by the remaining value calculation 1 process 115 is defined as a calculation item variable. As the actually measured value (Y value), a value calculated by the remaining value calculation 1 process 115 is used. Data smaller than five among data according to popularity index category is eliminated from object, and the multi-regression data is calculated for the above data.

In distribution data creation step, data is created by CSV file for distributing data to user. Here, among the distribution files, only difference data (data newly generated) of vehicle sold extraction data and new vehicle type data is object, and the entire remaining value calculation association data is object. The user distribution data can be received from WEB using the Internet circuit. Here, in the vehicle type database, whenever new vehicle type newly produced is announced or produced, vehicle type data concerning a new vehicle type is added and renewed. The new vehicle type includes a case in which a form authorization number is changed.

Next, a user side system 120 is explained. The user side system 120 comprises distribution data reception/ updating function 121, remaining value calculation program (remaining value calculation DLL) 122 which extracts data from the distribution data reception/updating function 121, and various applications using this remaining value calculation program 122.

Examples of the various applications are a specification condition vehicle type remaining value retrieving function 123, a contract data collective remaining value calculation function 124, a remaining value simulation calculation function 125, a remaining value simulation checking function 126 and another application function 127.

The distribution data reception/updating function 121 can receive new vehicle type data, vehicle sold extraction data and remaining value calculation related data of CSV file prepared by the server side system 110 by WEB using the Internet circuit, and updates the data based on the received data. Among the file distributedhere, only difference data of vehicle sold extraction data and new vehicle type data is object, the entire content of the remaining value calculation related data is object, and they are renewed. The new vehicle mode data is registered into the database as vehicle type data.

The remaining value calculation program 122 is provided with a remaining value calculation function and a vehicle database retrieving function.

In the remaining value calculation program 122, in reply to a remaining value (estimated sold price) calculation demand from user application, a remaining value calculation result is returned from a select result of the vehicle type database as a return value. The remaining value calculation program 122 can be utilized for an inherent application utilizing a result of the remaining value calculation. This remaining value calculation program 122 is modularized, supplied in the form of DLL file or COM file, and has a vehicle database retrieving function and a remaining value calculation function. There are a primary retrieving program and a secondary retrieving program as a vehicle database retrieving function. The primary retrieving program is a function to specify vehicle from the popularly called model with a maker, or a model specification number (or authorization model) and a classification identification number given in an automobile inspection certificate. The secondary retrieving program is a function for retrieving information provided in inspection sub-items such as the vehicle body number, authorization model (ignored when it is utilized in the primary retrieving function), vehicle type name, shape, fuel, transmission, displacement volume, basic vehicle price, vehicle weight and the maximum burden, when a vehicle could not be specified by the primary retrieving program or when necessary information was not given in the primary retrieving program. The remaining value calculation function utilizes multi-regression equation from information obtained by given data and a retrieval result of the vehicle type database, thereby calculating the remaining value.

Here, the remaining value calculation function calculates a remaining value (estimated sold price) by applying specification vehicle type condition information from various application such as the specification condition vehicle type remaining value retrieving function 123 to the selected remaining value calculation equation. Items of the vehicle type condition information to be specified can arbitrarily be set in accordance with market trends, and the following vehicle type condition information may be set in the following manner for example:

As the vehicle type identification information, model specification number, classification identification number, maker vehicle type name, specification and the like are specified, and specific grade vehicle type information is selected. Further, as a retrieving item from selected grade vehicle type information, maker name, vehicle type name, shape, fuel classification (gasoline vehicle or not), transmission classification (AT vehicle or not), new vehicle price, displacement volume, and first registration year can be used. On the other hand, as variation condition information, distance, lease period (sale scheduled day) and ranking (1-5) can be set.

The remaining value calculation equation has two patterns. i.e., a pattern in which data having elapsed months of 24 or longer is object and a pattern in which data having elapsed months of 23 or shorter is object. The multi-regression category and the popular category are the same as that of the server side system. The popularity index is multiplied by adjusting coefficient depending upon the number of vehicles according to the popularity index category. This index is adjusted and calculated based on the standard deviation of the popularity index.

In a specification condition vehicle type remaining value retrieving function 123, the contents of specification vehicle type conditions are retrieved, economic-fluctuation coefficient is added by ranking and calculated, and the result is displayed on a screen and output as a list. Then, remaining value (estimated sold price) produced by variation of variation information such as specific vehicle type and elapsed months is referred to. Here, as input information for retrieval, there are vehicle type identification information and variation condition information. As the vehicle type identification information, specific vehicles are narrowed down by specifying any one of model specification number/classification identification number or a maker/vehicle type name/specification. When two or more vehicle type data exists under this condition, a specific vehicle type is narrowed down by indicating data in window list. As the variation condition information, lease period (elapsed months), registration scheduled day (detailed classification of the number of years elapsed), mileage, and ranking are specified. On the other hand, as output information, estimated sold price (remaining value calculation), standard sold price, average sold price, estimated remaining value rate, standard sold rate, average sold rate, standard distance, average distance and a popular level are displayed. Moreover, a list of the vehicle sale track record data which satisfies a predetermined condition from the vehicle sold data can also be displayed.

The contract data collective remaining value calculation function 124 is used when user contract data (CSV format) is input, estimated remaining value result is output to a specification file and remaining values of large amount of data are collectively calculated.

In the remaining value simulation calculation function 125, user possession data (CSV format) is input, and contract selling price of a predetermined period (vehicle type whose contract is expired for seven years from the current year), estimated remaining value, remaining value profit and loss (estimated remaining value-contract selling price), and current price remaining value (remaining value if the vehicle is sold at the current time) are calculated according to vehicle type/shape.

In the remaining value simulation checking function 126, the remaining value simulation result according to specification vehicle type/shape is screen-displayed and a list is output. Moreover, contract selling price during a predetermined period (vehicle type whose contract is expired for seven years from the current year), estimated remaining value, remaining value profit and loss, and the current price remaining value are displayed and output as a list. It is desirable that the percentage can be specified for each year, and estimated remaining value and current price remaining value can be calculated again so as to meet economic-fluctuation.

This embodiment has been explained based on a case where new vehicle type data, vehicle sold extraction data and remaining value calculation related data are periodically distributed from the server side system 110 to the client side system 120, but only the remaining value calculation related data may be distributed to the client side system 120. In this case, concerning vehicle type data and vehicle sold extraction data, the data uniquely held by the client side system 120 can also be used. Moreover, the vehicle type data and vehicle sold extraction data can be held by the server side system 110, and the data can be referred to whenever the data is utilized. Further, the distribution data may not be distributed using communication network, and may be distributed using the storage medium.

The remaining value calculation program may be distributed from the server side system 110 to the client side system 120. In this case, the distributing method may be replaced by distribution of remaining value calculation related data.

Any of the embodiments explained using Figs. 11 to 18 may utilize the remaining value calculation program.

The mileage explained in the embodiment may be total mileage, or may be average mileage within a predetermined monthly or annual period and in that case, the actual using state can be expressed more precisely.

Although the above embodiments have been explained based on vehicles, the invention can also be applied to goods such as vessels, machine tools, equipment apparatus, and personal computer other than vehicles . The goods in the present invention may be software such as a program, and even if the goods may not necessarily be movable, and the goods may be a real estate such as a house and a building, or conception including equipment.

Industrial Applicability

As described above, according to the present invention, it is possible to provide a goods resold price analysis system which can objectively estimate sold price of the goods before resale from the sold data of goods such as already resold vehicle, without depending on human experience.

The invention can provide a vehicle resold price analysis system capable of obtaining information concerning objective estimated sold price and the like concerning the vehicle to be resold.

Further, the invention can provide a remaining value profit-and-loss analysis system capable of obtaining the objective remaining value profit-and-loss information at a contract expiration time concerning the vehicle in a using contact period.

Further, the invention can provide an asset evaluation system capable of obtaining the objective current price information at arbitrary time concerning a vehicle in a using contact period.

Further, the invention can provides a remaining value setting system capable of obtaining objective remaining value estimation information concerning new contract vehicle.

Further, the invention can provides a storage medium capable of obtaining a correlation equation or a table having the correlation for obtaining the objective sold price and the like concerning new contract vehicle.

Further, the invention can provide a storage medium capable of obtaining the objective sold price and the like concerning new contract vehicle.

Further, the invention can provide a storage medium which can obtain a correlation equation or a table having the correlation for obtaining the objective sold price and the like concerning new contract vehicle, and can output the information concerning the resold vehicle which is a base of the estimated sold price.

Further, the invention can provide a display which can output the information concerning the resold vehicle which is a base of the estimated sold price.

Further, the invention can provide a remaining value setting system capable of setting remaining price concerning new contract vehicle.

Further, the invention can provide a remaining value setting system capable of setting remaining price concerning new contract goods.

Further, the invention can provide a remaining value setting system capable of setting remaining price concerning a new vehicle type.

Further, the invention can provide a vehicle resold price analysis system capable of more correctly obtaining estimated sold price with respect to average vehicle having no special reason.

Further, the invention can provide a remaining value calculation program which can be used for various systems which can objectively estimate sold price or the like of goods before resale from sold data of goods such as already resold vehicle.

**Claims**

1. A vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, aweight tax, an insurance class, a using contract year, the expiration year of a using contract, a using contact period, a new vehicle price, a sold price after expiration of using contract, mileage at the time of resale, assessment evaluation at the time of resale, the system comprising a first step which extracts data concerning resold vehicle resold within a predetermined period, a second step which extracts a factor which has affected the vehicle resold price by correlation analysis using data extracted at the first step, and a third step which obtains multi-regression equation from a correlation of the extracted above-mentioned factor and the data concerning sold price, wherein the multi-regression equation obtained in the third step is used for estimating the information concerning estimated sold price, estimated remaining price, or estimated remaining value rate of vehicle before resale.

2. A vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, a weight tax, an insurance class, a using contract year, the expiration year of a using contract, a using contact period, a new vehicle price, a sold price after expiration of using contract, mileage at the time of resale, assessment evaluation at the time of resale, wherein a correlation equation or a table having a correlation for obtaining information concerning estimated sold price, estimated remaining price, or estimated remaining value rate of vehicle before resale is obtained, using at least data concerning actually using period such as elapsed months or using contact period from first registration year or a using contract year, out from data concerning the resold vehicle resold within a predetermined period, data concerning displacement volume, data concerning a new vehicle price, and data concerning the mileage in the actually using period.

3. A vehicle resold price analysis system which estimates information concerning a sold price, a remaining price, or a remaining value rate of a vehicle before resale, using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, a turbo and supercharger, a roof shape, emission control, a body size, automobile-tax classification, a weight tax, an insurance class, a using contract year, the expiration year of a using contract, a using contact period, a new vehicle price, a sold price after expiration of using contract, mileage at the time of resale, assessment evaluation at the time of resale, wherein a correlation equation or a table having a correlation for obtaining information concerning estimated sold price, estimated remaining price, or estimated remaining value rate of vehicle before resale is obtained, using at least data concerning actually using period such as elapsed months or using contact period from first registration year or a using contract year, and data concerning a new vehicle price, out from data concerning the resold vehicle resold within a predetermined period.

4. A vehicle resold price analysis system according to claim 3, wherein data concerning the mileage in the actually using period is stored.

5. A vehicle resold price analysis system according to any one of claims 2 to 4, wherein the resold vehicles are classified according to vehicle uses such as riding, business, cargo and bus, or according to a vehicle shape such as a sedan type, a hatchback type, and a one box type, and data concerning the classified resold vehicle is used.

6. A vehicle resold price analysis system according to any one of claims 2 to 5, wherein information concerning estimated sold price, estimated remaining price, or estimated remaining value rate of vehicle before resale is output using the obtained correlation equation or the table having the correlation.

7. A remaining value profit-and-loss analysis system which outputs remaining value profit-and-loss information at arbitrary time concerning vehicle in a using contact period using the correlation equation or the table having correlation obtained by the vehicle resold price analysis system described in any one of claims 2 to 5.

8. A storage medium for storing data used for a vehicle resold price analysis system which estimates information concerning sold price, remaining price, or remaining value rate of the vehicle before resale, using data concerning resold vehicle, wherein, concerning resold vehicle resold within a predetermined period, the storage medium stores therein at least data concerning actually using period such as elapsed months or a using contact period from first registration year or a using contract year, data concerning displacement volume, data concerning a new vehicle price, and data concerning mileage in the actually using period.

9. A storage medium for storing data used for a vehicle resold price analysis system which estimates information concerning sold price, remaining price, or remaining value rate of the vehicle before resale, using data concerning resold vehicle, wherein, concerning resold vehicle resold within a predetermined period, the storage medium stores therein at least data concerning actually using period such as elapsed months or a using contact period from first registration year or a using contract year, and data concerning a new vehicle price, concerning resold vehicle resold within a predetermined period.

10. A storage medium according to claim 9, wherein data concerning the mileage in the actually using period is stored.

11. A storage medium according to any one of claims 8 to 10, wherein the storage medium stores therein data which can be classified according to vehicle uses such as riding, business, cargo and bus, or according to a vehicle shape such as a sedan type, a hatchback type, and a one box type.

12. A display for displaying data stored in the storage medium described in any one of claims 8 to 11.

13. A vehicle resold price analysis system which estimates information concerning a sold price, a remaining price, or a remaining value rate of a vehicle before resale using a correlation equation drawn from correlation of at least elapsed period or using period from first registration year, vehicle type, popularity index determined according to the vehicle type, new vehicle price, a sold price at the time of resale, and the mileage at the time of resale, and using a table having the correlation, concerning the resold vehicle, wherein information concerning estimated sold price, estimated remaining price, or estimated remaining value rate at the time of resale is output by inputting or selecting data concerning elapsed period or using period from first registration year, vehicle type, popularity index determined according to the vehicle type, new vehicle price, and the mileage.

14. A goods resold price analysis system which estimates information concerning sold price, remaining price, or remaining value rate of the goods before resale using a correlation equation drawn from correlation of at least manufacturing or selling time or using period, selling price, sold price at the time of resale, and actual use data at the time of resale, and using a table having the correlation, wherein information concerning estimated sold price, estimated remaining price, or estimated remaining value rate at the time of resale is output by inputting or selecting data concerning elapsed period or using period from manufacturing or selling time, selling price, and actual use.

15. A vehicle resold price analysis system which estimates information concerning sold price, remaining price, or remaining value rate of a vehicle before resale using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, a weight tax, an insurance class, a using contract year, expiration year of a using contract, a using contact period, a new vehicle price, the sold price after expiration of using contract, mileage at the time of resale, assessment evaluation at the time of resale, wherein the system outputs average mileage, average sold price, average sold rate or average new vehicle price concerning resold vehicle, or standard mileage, standard sold price, standard sold rate, or standard new vehicle price concerning resold vehicle within a predetermined deviation value.

16. A remaining value profit-and-loss analysis system which estimates remaining value profit and loss of a vehicle before resale using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, aweight tax, an insurance class, a using contract year, expiration year of a using contract, a using contact period, a new vehicle price, the sold price after expiration of using contract, mileage at the time of resale, assessment evaluation at the time of resale, wherein an estimated sold price at the time of resale is calculated from the new vehicle price, monthly average mileage, the assumption mileage at the time of expiration of using contract, or assumption using period, concerning a vehicle in a using contact period, and remaining value profit and loss are output from the estimated sold price, and the estimated sold price set at the time of a using contract.

17. A remaining value profit-and-loss analysis system which estimates remaining value profit and loss of goods before resale using data concerning resold goods such as a maker name, a model grade, goods model, using contract year, the expiration year of a using contract, a using contact period, a selling price, a sold price after expiration of the using contract, actual using state at the time of resale, assessment evaluation at the time of resale wherein an estimated sold price at the time of resale is calculated from a selling price, a monthly use situation, the assumption use situation at the time of expiration of using contract, or assumption using period concerning the goods in a using contact period, and remaining value profit and loss are output from the estimated sold price, and the estimated sold price set at the time of the using contract.

18. A remaining value setting system which sets remaining value concerning new contract vehicle using data concerning resold vehicle such as a maker name, a vehicle type name, vehicle uses, a vehicle shape, a vehicle type grade, authorization model, a model specification number, a classification identification number, a transmission, a drive system, displacement volume, the number of doors, popularly called model, a capacity and burden, engine model, the number of cylinders of engine, an engine mechanism, tire size, turbo and supercharger, roof shape, emission control, body size, automobile-tax classification, a weight tax, an insurance class, a using contract year, expiration year of a using contract, a using contact period, a new vehicle price, the sold price after expiration of using contract, mileage at the time of resale, assessment evaluation at the time of resale, wherein an estimated sold price concerning new contract vehicle is calculated from a new vehicle price, monthly average mileage, assumption mileage at the time of expiration of using contract, or assumption using period concerning the vehicle in a using contact period, and remaining price concerning new contract vehicle is output from the estimated sold price.

19. A remaining value setting system which sets a remaining value concerning new contract goods using data concerning resold goods such as a maker name, a model grade, goods model, using contract year, the expiration year of a using contract, a using contact period, a selling price, a sold price after expiration of the using contract, actual using state at the time of resale, assessment evaluation at the time of resale, wherein an estimated sold price concerning new contract goods is calculated from a selling price, a monthly use situation, an assumption use situation at the time of expiration of using contract, or an assumption using period concerning the goods in a using contact period, and remaining price concerning new contract goods is output from the estimated sold price.

20. A vehicle resold price analysis system which estimates information concerning a sold price, a remaining price, or a remaining value rate of a vehicle before resale, using data concerning vehicle spec such as a maker name, the number of years elapsed from manufacturing year, a vehicle type, a vehicle shape, displacement volume, fuel, grade, a transmission, and a drive system, and a sold price for each of classified resold vehicles, wherein a resold vehicle having a standard deviation within a predetermined range is again selected from the average value of the sold price of the resold vehicle selected by the vehicle spec, and the average value of the sold price of the again selected resold vehicle is set as a standard sold price, and the standard sold price is set as an estimated sold price.

**21.** A remaining value calculation program used for obtaining output information peculiar to a user application which utilizes remaining value data by inputting vehicle type specification information for narrowing down specific vehicle type such as a model specification number, a classification identification number or a vehicle type name, and variable condition information such as a lease period, using period, vehicle registration date, leasing contract date, a start-using date, mileage and ranking, wherein the program comprises a vehicle database retrieving function which retrieves the database having vehicle sold data and vehicle type data such as the model specification number, the classification identification number and the vehicle type name, and which extracts a corresponding retrieval result information, and a remaining value calculation function which calculates the remaining value from the variation condition information was input in the user application, and the retrieval result information extracted by the retrieval.

**22.** A remaining value calculation program according to claim 21, wherein the program comprises, as the vehicle database retrieving function, a primary retrieving program which specifies a vehicle from a popularly called model of a maker, or a model specification number or certified model number described in an automobile inspection certificate, and a classification identification number, and which extracts a corresponding retrieval result information, and a secondary retrieving program which retrieves information given in retrieval sub-items such as a vehicle body number, a vehicle type name, shape, fuel, a transmission, displacement volume, a vehicle price, vehicle weight, or the maximum burden, when a vehicle can not be specified by the primary retrieving program or when a retrieval result information required by the primary retrieving program can not be extracted.

**23.** A remaining value calculation program according to claim 21, wherein as the remaining value calculation function, using a remaining value calculation equation which utilizes multi-regression analysis, the specified vehicle type and the variation condition are applied to the remaining value calculation equation to calculate the remaining value.

EP 1 286 287 A1

**FIG.1**

Bid hall

10 — Resale support system

11 — Support side vehicle resale system

16

Bid hall system

15 — Estimated sold price calculation system

13

Vehicle type database

14

Resold vehicle database

12

Bid system

— Renewal data →

Renewal data

Renewal data

Renewal data

Bid hall result data

Exhibiting data

20 — Leasing company

21 — Use side vehicle resold price analysis system

22 — Remaining value setting system

Estimated sold price calculation module

26 —

Estimating system

23 — Remaining value setting simulation system

Remaining value profit and loss analysis system — 24

Asset evaluation system — 25

Contract data

Contract-established data

27 —

Lease contract database

28 —

Key system

Contract expiration data

Estimated sale data

Contract expiration data

Exhibiting data

29

Exhibition support system

# FIG.2

Extract data concerning resold vehicle — S1

Normalize data — S2

Set classification of remaining value table — S3

Set analysis object period — S4

Form scatter diagram — S5

Form function of tendency — S6

Correct — S7

Form function for obtaining standard estimated sold price — S8

Form function for obtaining estimated sold price — S9

Adjust normal equation — S10

Select another predetermined period — S11
YES

NO

Set another classification — S12
YES

NO

End of obtain operation of equation data

# FIG. 3

New vehicle price according to successful bid price

• Successful bid price

Successful bid price (1000 yen)

fa(x)

New vehicle price (1000 yen)

# FIG. 4

EP 1 286 287 A1

# FIG. 5

Transition of corrected successful bid price(1000 yen)

Transition of successful bid price after correction of distance

◇ Successful bid price after correction

fa´(x)

New vehicle price (1000 yen)

Corrected successful bid price

29

Remaining value
rate after correction

Transition of remaining value
rate after correction

□ Remaining value
rate after correction

fb´(x)

Mileage (1000 K)

FIG. 6

EP 1 286 287 A1

Remaining value rate

Popularity index remaining value rate according to vehicle type

◇ Popularity index

Popularity index

FIG. 7

EP 1 286 287 A1

Remaining value rate

Popularity index remaining value rate according to vehicle type

◇ Popularity index

Popularity index

FIG. 8

EP 1 286 287 A1

# FIG. 9

```
┌─────────────────────────┐
│ Extract data concerning │──── S1
│     resold vehicle      │
└─────────────────────────┘
            │
            ▼
┌─────────────────────────┐
│     Normalize data      │──── S2
└─────────────────────────┘
            │
            ▼
┌─────────────────────────┐
│Set classification of    │──── S3
│remaining value table    │
└─────────────────────────┘
            │
            ▼
┌─────────────────────────┐
│  Set analysis object period │──── S4
└─────────────────────────┘
            │
            ▼
┌─────────────────────────┐
│   Form scatter diagram  │──── S5
└─────────────────────────┘
            │
            ▼
┌─────────────────────────┐
│ Multi-regression analysis │──── S16
└─────────────────────────┘
            │
            ▼
┌─────────────────────────┐
│        Evaluate         │──── S17
└─────────────────────────┘
            │
            ▼
┌─────────────────────────┐
│   Determine remaining   │──── S18
│       difference        │
└─────────────────────────┘
            │
            ▼
┌─────────────────────────┐
│Determine remaining value rate │──── S19
└─────────────────────────┘
            │
            ▼
        ╱────────╲
  YES  ╱  Select   ╲  S11
◄─────╱   another    ╲
       ╲ predetermined╱
        ╲   period   ╱
         ╲──────────╱
            │ NO
            ▼
        ╱────────╲
       ╱   Set     ╲  S12   YES
       ╲  another   ╱──────►
        ╲classification╱
         ╲──────────╱
            │ NO
            ▼
┌─────────────────────────┐
│ End of obtaining operation of │
│  multi-regression analysis    │
└─────────────────────────┘
```

FIG. 1 0

| | Multi-determination | Embodi-ment 1 0.79954 | Embodi-ment 2 0.79844 | Embodi-ment 3 0.75309 | Embodi-ment 4 0.75249 | Embodi-ment 5 0.70797 | Embodi-ment 6 0.75103 | Embodi-ment 7 0.70792 | Embodi-ment 8 0.7099 | Embodi-ment 9 0.64205 |
|---|---|---|---|---|---|---|---|---|---|---|
| 1 | Number of elapsed months | ○ | ○ | ○ | ○ | | ○ | | ○ | |
| 2 | Displacement volume | ○ | | ○ | ○ | ○ | | | ○ | ○ |
| 3 | New vehicle price | ○ | ○ | | ○ | ○ | ○ | ○ | | |
| 4 | Monthly mileage | ○ | ○ | ○ | | ○ | | ○ | | ○ |

# FIG. 1 1

EP 1 286 287 A1

Remaining value : Form

| Produce remaining value | Estimated remaining value | Remaining profit and loss | Remaining value cost | Display regarding the vehicle type | | Clear condition |

Vehicle type: Corolla    Shape:

| Vehicle type | Shape | Data column | Total number of vehicles | 2000 year | 2001 year | 2002 year | 2003 year | 2004 year | 2005 year | 2006 year |
|---|---|---|---|---|---|---|---|---|---|---|
| Corolla | BV | Contract remaining value | 137,449 | 4,838 | 27,039 | 35,802 | 41,538 | 20,054 | 6,314 | 1,864 |
| Corolla | BV | Estimated remaining value | 133,057 | 5,806 | 32,066 | 37,552 | 32,499 | 18,568 | 5,429 | 1,137 |
| Corolla | BV | Remaining value profit and loss | -4,392 | 968 | 5,027 | 1,750 | -9,039 | -1,486 | -885 | -727 |
| Corolla | BW | Contract remaining value | 84,297 | 3,948 | 19,630 | 34,531 | 13,779 | 10,134 | 1,599 | 676 |
| Corolla | BW | Estimated remaining value | 81,196 | 2,888 | 19,267 | 34,526 | 11,901 | 10,763 | 1,613 | 238 |
| Corolla | BW | Remaining value profit and loss | -3,101 | -1,060 | -363 | -5 | -1,878 | 629 | 14 | -438 |
| Corolla | SD | Contract remaining value | 280,161 | 6,926 | 57,639 | 102,433 | 68,659 | 35,727 | 6,988 | 1,789 |
| Corolla | SD | Estimated remaining value | 274,812 | 7,199 | 54,461 | 99,017 | 59,907 | 45,912 | 6,554 | 1,762 |
| Corolla | SD | Remaining value profit and loss | -5,349 | 273 | -3,178 | -3,416 | -8,752 | 10,185 | -434 | -27 |

FIG. 12

36

# FIG. 1 3

Remaining value : Form

Vehicle : Corolla

Shape

Clear condition

| Vehicle type name | Series | User system form | | 2002 year | 2001 year | 2002 year | 2003 year | 2004 year | 2005 year |
|---|---|---|---|---|---|---|---|---|---|
| Corolla | BV | Remaining value profit and loss | -4,392 | 968 | 5,027 | 1,750 | -9,039 | -1,486 | -885 | -727 |
| Corolla | BW | Remaining value profit and loss | -3,101 | -1,060 | -363 | -5 | -1,878 | 629 | 14 | -438 |
| Corolla | SD | Remaining value profit and loss | -5,349 | 273 | -3,178 | -3,416 | -8,752 | 10,185 | -434 | -27 |

# FIG. 14

**Remaining value : Form**

Vehicle type: Corolla  Shape:

| Shape | Data content | Total number of vehicle types | 2000 year | 2001 year | 2002 year | 2003 year | 2004 year | 2005 year | 2006 year |
|---|---|---|---|---|---|---|---|---|---|
| BV | Contract remaining value | 606,636 | 32,197 | 110,511 | 175,658 | 164,549 | 87,756 | 27,593 | 8,372 |
| BV | Estimated remaining value | 607,472 | 45,466 | 133,516 | 190,104 | 143,238 | 73,318 | 17,722 | 4,109 |
| BV | Remaining value profit and loss | 836 | 13,269 | 23,005 | 14,446 | -21,311 | -14,438 | -9,871 | -4,263 |
| BV | Remaining value asset | 914,585 | 61,379 | 189,593 | 283,254 | 223,451 | 119,508 | 30,128 | 7,273 |
| BW | Contract remaining value | 926,829 | 68,213 | 225,319 | 304,693 | 167,399 | 111,098 | 39,593 | 10,514 |
| BW | Estimated remaining value | 925,276 | 63,213 | 203,178 | 290,790 | 171,953 | 135,636 | 47,263 | 13,242 |
| BW | Remaining value profit and loss | -1,554 | -5,000 | -22,141 | -13,903 | 4,554 | 24,538 | 7,670 | 2,728 |
| BW | Remaining value asset | 1,400,247 | 85,337 | 288,513 | 433,277 | 268,246 | 221,087 | 80,347 | 23,439 |
| CP | Contract remaining value | 22,824 | 0 | 3,667 | 3,408 | 7,716 | 4,056 | 3,939 | 38 |
| CP | Estimated remaining value | 21,467 | 0 | 3,317 | 3,309 | 6,579 | 4,188 | 3,774 | 300 |
| CP | Remaining value profit and loss | -1,357 | 0 | -350 | -99 | -1,137 | 132 | -165 | 262 |
| CP | Remaining value asset | 33,677 | 0 | 4,709 | 4,931 | 10,263 | 6,826 | 6,415 | 532 |
| CV | Contract remaining value | 799,996 | 34,000 | 113,391 | 224,545 | 227,601 | 128,006 | 58,298 | 14,155 |
| | Total number of contract remaining values | 5,340,257 | 276,286 | 1,139,280 | 1,635,967 | 1,216,196 | 759,209 | 235,088 | 78,231 |
| | Total number of estimated remaining values | 5,336,061 | 266,896 | 1,104,470 | 1,562,338 | 1,191,449 | 847,122 | 266,131 | 97,655 |
| | Total number of remaining value profit and loss | -4,195 | -9,390 | -34,810 | -73,629 | -24,747 | 87,913 | 31,043 | 19,424 |
| | Total number of remaining value asset | 8,121,282 | 360,310 | 1,568,348 | 2,327,883 | 1,858,661 | 1,380,808 | 452,422 | 172,849 |

FIG. 1 5

| Value type | 2000 year | 2001 year | 2002 year | 2003 year | 2004 year | 2005 year | 2006 year |
|---|---|---|---|---|---|---|---|
| | 100% | 100% | 100% | 100% | 100% | 100% | 100% |
| BV Remaining value / profit and loss | 836 / 13,269 | 23,005 | 14,446 | -21,311 | -14,438 | -9,871 | -4,263 |
| BW Remaining value / profit and loss | -1,554 / -5,000 | -22,141 | -13,903 | 4,554 | 24,538 | 7,670 | 2,728 |
| CP Remaining value / profit and loss | -1,357 / 0 | -350 | -99 | -1,137 | 132 | -165 | 262 |
| CV Remaining value / profit and loss | 11,887 / 6,660 | 7,585 | -8,484 | 3,047 | 3,501 | -554 | 132 |
| CW Remaining value / profit and loss | -38 / -3,241 | -2,533 | -1,719 | -1,131 | 4,040 | 2,596 | 1,955 |
| HB Remaining value / profit and loss | -12,233 / -605 | -1,969 | 46 | -5,669 | -2,550 | -1,160 | -326 |
| HT Remaining value / profit and loss | -620 / -11,994 | -32,085 | -29,472 | 11,251 | 31,288 | 20,073 | 10,320 |
| SD Remaining value / profit and loss | -1,122 / -8,478 | -6,322 | -34,444 | -14,349 | 41,401 | 12,454 | 8,616 |

Vehicle type: Corolla

Totals: -1,150 | -9,380 | ... | ... | 87,913 | 31,043 | 19,424

FIG. 16

EP 1 286 287 A1

# FIG. 1 7

FIG. 18

EP 1 286 287 A1

Server side system

Vehicle sale data

Input data extraction condition

Vehicle type data

New vehicle type data

The internet 100

Data extraction /conversion

111

114

Vehicle sale extraction data

Specify calculation variable item

Vehicle sale extraction data

113

Remaining value calculation 1

Calculation variable item data

Remaining value calculation related data

115

Multi-regression analysis coefficient data

Specify category item

Popularity index calculation

112

Calculation category data

116

Popularity index data

Remaining value calculation 2

117

Multi-regression analysis coefficient data

110

Client side system

WEB

Vehicle type data

Vehicle sale extraction data

Remaining value calculation related data

121

Vehicle database retrieving function

Primary retrieving function

Secondary retrieving function

Remaining value calculation function

Remaining value calculation program

122

123

125

127

Check remaining value of specified condition vehicle typ

Calculate remaining value simulation

Another application

124

Collectively calculate contract data remaining value

Check remaining value simulation

120

126

EP 1 286 287 A1

FIG. 19

43

EP 1 286 287 A1

## INTERNATIONAL SEARCH REPORT

| International application No. |
|---|
| PCT/JP01/04398 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched
Jitsuyo Shinan Koho          1922-1996    Toroku Jitsuyo Shinan Koho  1994-2001
Kokai Jitsuyo Shinan Koho    1971-2001    Jitsuyo Shinan Toroku Koho  1996-2001

Electronic data base consulted during the international search (name of data base and, where practicable, search terms used)
JICST FILE (JOIS)

**C. DOCUMENTS CONSIDERED TO BE RELEVANT**

| Category* | Citation of document, with indication, where appropriate, of the relevant passages | Relevant to claim No. |
|---|---|---|
| Y | JP 11-66189 A (Chiharu KAMIYAMA), 09 March, 1999 (09.03.99)   (Family: none) | 1-7,13-23 |
| Y | Mitsuo TAKAHASHI, "Business Soft Jissen Katsuyou Kenkyu (13), Shourai Yosoku no tameno Fukaketsu no Tool Toukei Kaiseki Soft JUSE Series Jitsumuka no kimekomakai Needs Han-ei", OA Business Pasokon, Vol.15, No.11, Denpa Shinbunsha (Japan) 01 November, 1997 (01.11.97) pp.115-119. | 1-7,13-23 |
| Y | JP 11-25158 A (Ryoichi INO), 29 January, 1999 (29.01.99)   (Family: none) | 1-7,13-23 |
| Y | JP 11-25164 A (Ryoichi INO), 29 January, 1999 (29.01.99)   (Family: none) | 1-7,13-23 |
| Y | JP 8-69503 A (Fujitsu Limited), 12 March, 1996 (12.03.96)   (Family: none) | 7,16-19 |
| Y | JP 9-251486 A (Ryoichi INO), 22 September, 1997 (22.09.97)   (Family: none) | 1-7,13-23 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August, 2001 (17.08.01) | 28 August, 2001 (28.08.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

44

## INTERNATIONAL SEARCH REPORT

| | International application No. |
|---|---|
| | PCT/JP01/04398 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-222559 A (Ryoichi INO),<br>21 August, 1998 (21.08.98)   (Family: none) | 1-7,13-23 |
| Y | JP 10-240817 A (Ryoichi INO),<br>11 September, 1998 (11.09.98)   (Family: none) | 1-7,13-23 |
| Y | JP 10-261009 A (Ryoichi INO),<br>29 September, 1998 (29.09.98)   (Family: none) | 1-7,13-23 |
| Y | JP 11-66148 A (Ryoichi INO),<br>03 September, 1999 (03.09.99)   (Family: none) | 1-7,13-23 |

Form PCT/ISA/210 (continuation of second sheet) (July 1992)

## INTERNATIONAL SEARCH REPORT

International application No.

PCT/JP01/04398

**Box I    Observations where certain claims were found unsearchable (Continuation of item 1 of first sheet)**

This international search report has not been established in respect of certain claims under Article 17(2)(a) for the following reasons:

1. ☒ Claims Nos.: 8-12
because they relate to subject matter not required to be searched by this Authority, namely:

Subject matters in claims 8-12 are mere presentations of information.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.
☐    No protest accompanied the payment of additional search fees.

Form PCT/ISA/210 (continuation of first sheet (1)) (July 1992)